(19) **Europäisches Patentamt**
**European Patent Office**
**Office européen des brevets**

(11) **EP 4 290 855 A1**

(12) **EUROPEAN PATENT APPLICATION**
published in accordance with Art. 153(4) EPC

(43) Date of publication:
**13.12.2023 Bulletin 2023/50**

(21) Application number: **22749595.9**

(22) Date of filing: **27.01.2022**

(51) International Patent Classification (IPC):
**H04N 5/369** (2011.01)    **H04N 5/232** (2006.01)

(52) Cooperative Patent Classification (CPC):
**H04N 23/60; H04N 25/70**

(86) International application number:
**PCT/JP2022/003026**

(87) International publication number:
**WO 2022/168721 (11.08.2022 Gazette 2022/32)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **08.02.2021   JP 2021018593**

(71) Applicant: **Sony Semiconductor Solutions
Corporation
Atsugi-shi, Kanagawa 243-0014 (JP)**

(72) Inventors:
• **MAHARA, Kumiko**
**Atsugi-shi, Kanagawa 243-0014 (JP)**
• **AKISHITA, Toru**
**Tokyo 108-0075 (JP)**
• **YAMAMOTO, Hirotake**
**Atsugi-shi, Kanagawa 243-0021 (JP)**

(74) Representative: **Müller Hoffmann & Partner
Patentanwälte mbB
St.-Martin-Strasse 58
81541 München (DE)**

(54) **IMAGE CAPTURE DEVICE AND IMAGE CAPTURE METHOD**

(57)    An imaging device according to an embodiment includes: a pixel array section (101) that includes a plurality of pixels that are arranged in a matrix array and each generate a pixel signal corresponding to light received by exposure, and outputs image data of each of the pixel signals generated by the plurality of pixels at a frame cycle; a signature generating section (1021) that generates signature data on the basis of the image data; and an output control section (104) that controls output of the image data and the signature data, and the signature generating section generates the signature data by thinning the image data output at the frame cycle in a unit of thinning that is based on the frame cycle.

FIG.13

EP 4 290 855 A1

**Description**

Field

The present disclosure relates to an imaging device and an imaging method.

Background

In recent years, as an image processing technique improves, authenticity proof of an image has become important. In order to perform authenticity proof for proving that an image is authentic (not falsified), a method for adding in a sensor a signature to an image imaged by the sensor and outputting the image to an outside of the sensor is conceivable. For example, signature data is generated on the basis of RAW data imaged by the sensor, and the RAW data to which this signature data has been added is output to the outside of the sensor. The RAW data output outside the sensor is generally subjected to image processing such as contrast adjustment and compression encoding processing, and is used as a processed image. Patent Literature 1 describes an image sensor that outputs signature information in association with image information.

It is possible to prove that the RAW data is true on the basis of the added signature data. Consequently, by comparing the processed image obtained by performing image-processing on this RAW data, and the image of this RAW data outside the sensor, it is possible to determine whether or not a processed image is falsified. According this authenticity proof method, RAW data for indicating that the processed image is not falsified and a signature thereof are also held together with the processed image subjected to image processing.

When the RAW data and the signature thereof are output from the sensor, it is preferable to perform encryption processing on the signature to ensure security of the signature. In this case, a common key scheme that uses a common key for encryption and decryption among encryption schemes is not appropriate as an encryption scheme for preventing falsification since even a side that checks an image has the same key as that on the sensor side. On the other hand, the public key encryption scheme is suitable as an encryption scheme for falsification since different keys are used on the sensor side and the side that checks the image.

Citation List

Patent Literature

Patent Literature 1: JP 2017-184198 A

Summary

Technical Problem

It is known that the public key encryption scheme requires a longer time for encryption than the common key scheme. Therefore, in a case where, for example, the above-described authenticity proof method is applied to a moving image, and the signature is encrypted using the public key encryption scheme, it is concerned that a frame rate of the moving image becomes a processing time bottleneck of a signature.

An object of the present disclosure is to provide an imaging device and an imaging method that can output a moving image that enables authenticity proof while suppressing an influence on a frame rate.

Solution to Problem

For solving the problem described above, an imaging device according to one aspect of the present disclosure has a pixel array section that includes a plurality of pixels that are arranged in a matrix array and each generate a pixel signal corresponding to light received by exposure, and outputs image data of each of the pixel signals generated by the plurality of pixels at a frame cycle; a signature generating section that generates signature data on a basis of the image data; and an output control section that controls output of the image data and the signature data, wherein the signature generating section generates the signature data by thinning the image data output at the frame cycle in a unit of thinning that is based on the frame cycle.

Brief Description of Drawings

FIG. 1 is a schematic diagram depicting an example of fake image generation according to an existing technique.

FIG. 2 is a schematic diagram depicting an example of fake image generation according to the existing technique.

FIG. 3A is a schematic diagram schematically depicting a configuration example of a camera that uses a sensor that adds signature data to image data and outputs the image data according to the existing technique.

FIG. 3B is a schematic diagram depicting an example of RAW data and signature data output from the sensor according to the existing technique.

FIG. 4A is a diagram for describing a method for outputting signature data generated on the basis of a moving image according to the existing technique.

FIG. 4B is a diagram for describing a method for outputting signature data generated on the basis of a moving image according to the existing technique.

FIG. 5 is a block diagram depicting a configuration of an example of a camera that is applicable to each embodiment.

FIG. 6 is a block diagram depicting a configuration of an example of a pixel array section that is applicable to each embodiment.

FIG. 7A is a diagram depicting an example where the pixel array section according to each embodiment is formed by a stacked CIS of a two-layer structure.

FIG. 7B is a diagram depicting an example where the pixel array section according to each embodiment is formed by the stacked CIS of a three-layer structure.

FIG. 8 is a diagram schematically depicting a first example of an output format of moving image data that is applicable to each embodiment.

FIG. 9A is a diagram schematically depicting a second example of an output format of moving image data that is applicable to each embodiment.

FIG. 9B is a diagram schematically depicting a second example of the output format of the moving image data that is applicable to each embodiment.

FIG. 10A is a block diagram schematically depicting a configuration of a camera according to each embodiment.

FIG. 10B is a schematic diagram for describing an outline of each embodiment.

FIG. 11 is a diagram for describing a method for outputting signature data generated on the basis of a moving image according to each embodiment.

FIG. 12 is a schematic diagram for describing a timing that is applicable to each embodiment and at which a signature processing section executes generation and executes encryption processing of signature data.

FIG. 13 is a block diagram depicting a configuration of an example of a sensor according to a first embodiment.

FIG. 14 is a diagram for describing a method for outputting signature data in the sensor according to the first embodiment.

FIG. 15 is a diagram depicting a first example of an output position of signature data that is applicable to the first embodiment.

FIG. 16 is a diagram depicting a second example of the output position of the signature data that is applicable to the first embodiment.

FIG. 17 is a diagram depicting a third example of the output position of the signature data that is applicable to the first embodiment.

FIG. 18 is a diagram for describing an outline of a second embodiment.

FIG. 19 is a block diagram depicting a configuration of an example of a sensor according to a first specific example of the second embodiment.

FIG. 20 is a diagram depicting an example of a signature data calculation completion notification method according to a first specific example of the second embodiment.

FIG. 21 is a block diagram depicting a configuration of an example of a sensor according to a second specific example of the second embodiment.

FIG. 22 is a diagram depicting an example of a signature data calculation completion notification method according to the second specific example of the second embodiment.

FIG. 23 is a diagram depicting an example of generation and output of signature data according to the third embodiment.

FIG. 24 is a diagram depicting a use example where a camera to which the above-described first embodiment, second embodiment, and third embodiment are applicable is used according to the fourth embodiment.

FIG. 25 is a block diagram depicting a schematic configuration example of a vehicle control system that is an example of a mobile body control system to which a technique according to the present disclosure is applicable.

FIG. 26 is a diagram depicting an example of an installation position of an imaging section.

Description of Embodiments

Hereinafter, embodiments of the present disclosure will be described in detail with reference to the drawings.

Note that, in the following embodiments, the same parts will be assigned the same reference numerals, and redundant description will be omitted.

Hereinafter, the embodiments of the present disclosure will be described in the following order.

1. Existing Technique
2. Technique Applicable to Each Embodiment
2-1. Configuration Applicable to Each Embodiment
2-2. Output Data Format Applicable to Each Embodiment
3. Outline of Each Embodiment of Present Disclosure
4. First Embodiment of Present Disclosure
4-1. Configuration According to First Embodiment
4-2. Output Position of Signature Data Applicable to First Embodiment
5. Second Embodiment of Present Disclosure
5-1. Outline of Second Embodiment
5-2. First Specific Example of Second Embodiment
5-3. Second Specific Example of Second Embodiment
6. Third Embodiment of Present Disclosure
7. Fourth Embodiment of Present Disclosure

[1. Existing Technique]

First, prior to description of the embodiments of the present disclosure, the existing technique related to the technique of the present disclosure will be described in order to facilitate understanding. In recent years, authenticity proof of images published via the Internet by news media, Social Networking Services (SNSs), or the like has been a problem. That is, in recent years, development of image processing tools and fake image generation techniques that use Artificial Intelligence (AI) makes authenticity proof of images difficult.

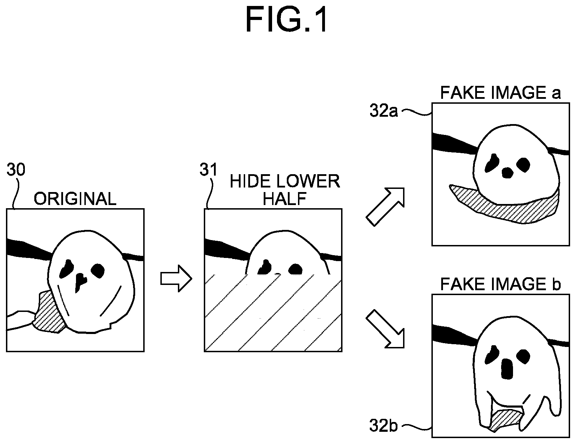

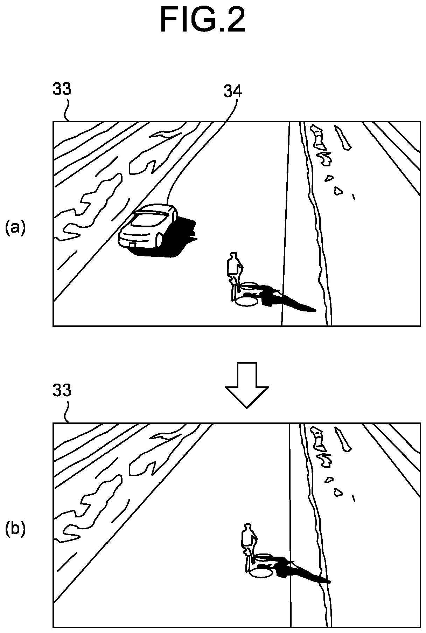

FIGS. 1 and 2 are schematic diagrams depicting examples of fake image generation according to the existing technique. For example, as depicted in FIG. 1, there is known a technique of creating an image 301 formed by hiding a lower half of an original image 300, predicting the lower half on the basis of this image 301, and generating an image 302a (fake image a) or an image 302b (fake image b) different from the image 302a.

Furthermore, also for a moving image, there is known a technique that makes it possible to delete only a moving object 304 included in a frame 303a from the frame 303a of a moving image depicted in section (a) of FIG. 2. In this case, in a frame 303b temporally close to the frame 303a shown in section (b), the object 304 is deleted, and a position where the object 304 should originally exist is replaced with a road surface.

In these examples, in a case where the original image 300 and the frame 303a are unknown, it is difficult to determine whether or not the images 302a and 302b and the frame 303b are falsified fake images, that is, to perform authenticity proof on the images 302a and 302b and the frame 303b.

As one of such methods for facilitating authenticity proof of images, there is known a method for adding a signature to an imaged image that is an original image inside a sensor that obtains imaged images.

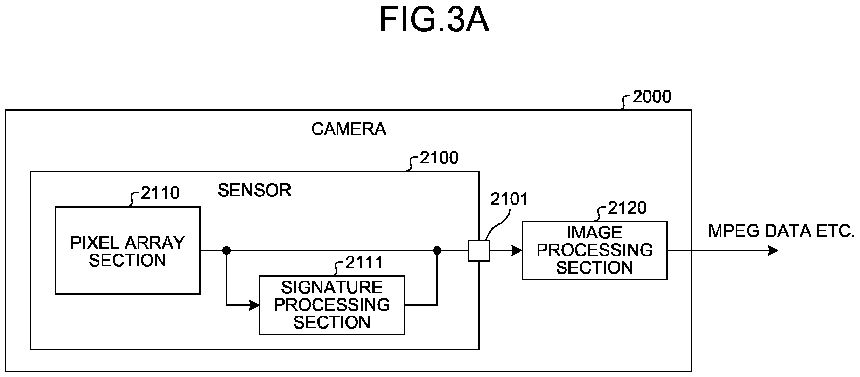

FIG. 3A is a schematic diagram schematically depicting a configuration example of a camera that uses a sensor that adds signature data to image data and outputs the image data according to the existing technique. In FIG. 3A, a camera 2000 includes a sensor 2100 and an image processing section 2120.

The sensor 2100 includes a pixel array section 2110 and a signature processing section 2111, and is includes, for example, one semiconductor chip (or a plurality of bonded semiconductor chips). The pixel array section 2110 includes a plurality of pixels that generate pixel signals respectively corresponding to received light, and obtains image data in frame units. The image data obtained herein is unprocessed data that is pixel data that is based on a pixel signal and is not subjected to demosaic processing or the like. The RAW data obtained by the pixel array section 2110 is output from an interface 2101 in accordance with a frame cycle.

The signature processing section 2111 generates signature data on the basis of the RAW data obtained by the pixel array section 2110. The signature data generated by the signature processing section 2111 is encrypted by a predetermined encryption scheme, associated with the corresponding RAW data, and output from the interface 2101.

The signature data generated in the sensor 2100 is added to the RAW data output from the interface 2101, so that it is possible to perform authenticity proof for proving that the RAW data is authentic (not falsified) RAW data. When, for example, signature data is generated on the basis of the RAW data output from the sensor 2100 similarly to the signature processing section 2111, and the generated signature data and the signature data output from the sensor 2100 match, it is possible to prove that the RAW data is authentic (not falsified) RAW data.

The RAW data and the signature data output from the sensor 2100 are supplied to the image processing section 2120. The image processing section 2120 compresses and encodes the supplied RAW data using a moving image compression scheme such as a Moving Picture Experts Group (MPEG) scheme. For example, the compressed and encoded MPEG data is output to an outside of the camera 2000.

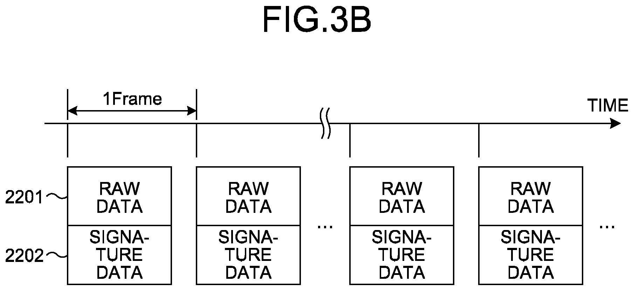

FIG. 3B is a schematic diagram depicting an example of RAW data and signature data output from the sensor 2100 according to the existing technique. As depicted in FIG. 3B, RAW data 2201 and encrypted signature data 2202 are output per frame in accordance with a frame cycle.

Here, representative encryption schemes that are applicable to encrypt the signature data 2202 include common key encryption schemes and public key encryption schemes. According to a Data Encryption Standard (DES) that is an example of a common key encryption scheme, for example, an operation corresponding to transposition or substitution that changes in accordance with a bit string of an encryption key or an operation on the basis of exclusive OR (XOR) is repeated with respect to encryption target data (plaintext) to encrypt the plaintext. According to the common key encryption scheme, while a calculation load is relatively small, a common key is used for encryption and decryption, therefore a side that checks an image has the same key as that on the sensor side, and the common key encryption scheme is inappropriate as an encryption scheme for preventing falsification.

On the other hand, the public key encryption scheme is suitable as an encryption scheme for falsification since different keys are used on the sensor side and the side that checks the image. On the other hand, according to the public key encryption scheme, a plaintext P is encrypted into a ciphertext C by following equation (1). Note that equation (1) is based on Rivest-Shamir-Adleman (RSA) encryption that is one of public key encryption schemes. In equation (1), a value N is a product of two respectively different large prime numbers, and "mod N" represents a remainder modulo the value N. Furthermore, a value E is an appropriately selected positive integer. A set of the value E and the value N is used as a public key.

$$C = P^E \bmod N \qquad\qquad (1)$$

As shown in equation (1), RSA encryption raises the plaintext P to the power of E with the large value E, and calculation for calculating a remainder with the value N is further performed to obtain the ciphertext C. Therefore, RSA encryption has a very large calculation load of encryption compared to encryption processing by the above-described common key encryption scheme, and takes a long time for encryption.

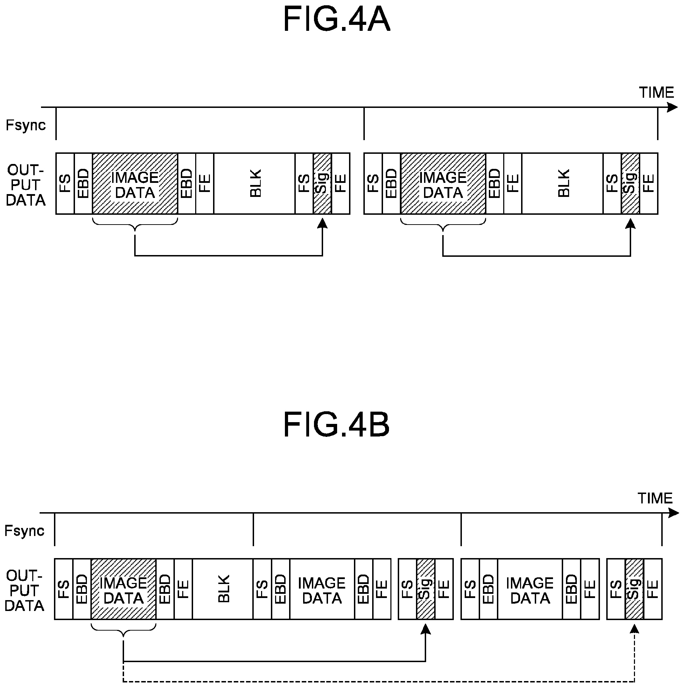

FIGS. 4A and 4B are diagrams for describing a method for outputting signature data generated on the basis of a moving image according to the existing technique. Note that, although details will be described later, in FIGS. 4A and 4B, [FS] is a line that includes a flag indicating a frame start, and [FE] is a line that includes a flag indicating a frame end. [EBD] is a line that includes a flag indicating embedded data. [FS] and [FE] can output a plurality of sets in one frame period. [BLK] indicates a line of blank data. Furthermore, a signal Fsync indicates a frame synchronization signal, and indicates a lapse of time in a right direction.

FIG. 4A schematically depicts an example of a case where signature data Sig is output per frame of the moving image. The signature processing section 2111 reads image data (RAW data) for one frame from the pixel array section 2110, and then starts signature data generation calculation on the basis of the read image data. In this example of FIG. 4A, the signature data Sig is output in the same frame period as that of the image data of a generation source to output per frame of the signature data Sig.

Signature data generation calculation of the signature processing section 2111 also includes encryption calculation that is based on above-described equation (1), and a required processing time is several 10 [msec (milliseconds)] on an assumption that a processor does not perform processing other than the signature data generation calculation. In a case where a frame rate is 60 [fps (frames per second)], one frame period is approximately 16.7 [msec]. Therefore, in a case where the pixel array section 2110 reads the image data, and then starts signature data generation calculation, it is extremely difficult to output the signature data Sig in the same frame period as that of the image data. In a case where it is necessary to perform processing of outputting the signature data Sig in the same frame period as a period for reading this image data, it is necessary to take measures to, for example, decrease the frame rate and parallelize the processor.

FIG. 4B schematically depicts an example of a case where a frame for reading image data and a frame for outputting the signature data Sig on the basis of the image data are differed. For example, the signature processing section 2111 reads the image data from the pixel array section 2110, then starts the signature data generation processing, and outputs the generated signature data Sig after the image data period from a next frame in which the image data is read. In this case, the signature data Sig can be output without causing a failure.

However, according to this method, management of the signature data Sig output with delay per frame is concerned to become complicated. Furthermore, in a case where the frame rate is increased to 120 [fps] and 240 [fps], it is probable that it is difficult to output the signature data Sig on the basis of the image data in a next frame in which image data is read. Therefore, for example, as indicated by a dotted arrow in FIG. 4B, it is conceivable to output the signature data Sig on the basis of the image data after two frames in which the image data is read and, moreover, after three frames in which the image data is read. However, in this case, it is expected that management of the signature data Sig becomes more difficult. Furthermore, when the frame rate is increased, it is probable that a duration of one frame period becomes equal to or less than a time required for the signature processing section 2111 to generate signature data, and it is concerned that cost increases due to measures such as parallelization of the processor and the increase in the frame rate.

Therefore, according to the present disclosure, the signature data is output every several frames of the image data. Consequently, the sensor can secure a sufficient time from a time when the pixel array section outputs image data to a time when the signature data is output. Furthermore, it is also possible to support an increase in the frame rate by adjusting an interval for outputting signature data.

That is, in a case of a moving image, rapid falsification can be detected by taking a difference in image data between frames. Consequently, detection of falsification of the moving image can be supported by a side that receives the moving image. Furthermore, it is conceivable that it is sufficient to prove a sensor that has output the moving image every multiple frames.

[2. Technique Applicable to Each Embodiment]

(2-1. Configuration Applicable to Each Embodiment)

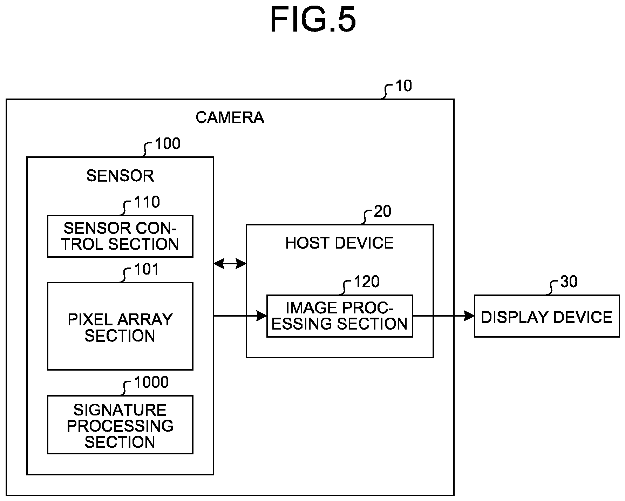

Next, a technique applicable to each embodiment will be described. FIG. 5 is a block diagram depicting a configuration of an example of a camera applicable to each embodiment. In FIG. 5, a camera 10 includes a host device 20 and a sensor 100. The host device 20 includes an image processing section 120.

The sensor 100 includes a pixel array section 101, a sensor control section 110, and a signature processing section 1000. The sensor control section 110 includes, for example, a processor and a memory, and controls an entire operation of this sensor 100 in accordance with programs stored in a memory.

The pixel array section 101 includes a plurality of pixels that are arranged in a matrix array and each generate a pixel signal corresponding to light received by exposure, and obtains image data by each pixel signal generated by the plurality of pixels. The pixel array section 101 can obtain image data at a frame cycle. The image data obtained by the pixel array section 101 is unprocessed RAW data.

The signature processing section 1000 generates signature data on the basis of the RAW data obtained by the pixel array section 101 under, for example, control of the sensor control section 110.

The RAW data obtained at the frame cycle by the pixel array section 101 is supplied to the image processing section 120 included in the host device 20. The image processing section 120 performs predetermined image processing on the supplied RAW data, and generates visible moving image data. Furthermore, the image processing section 120 performs compression encoding processing on the generated visible moving image data by a compression encoding scheme for a moving image such as a Moving Picture Experts Group (MPEG) scheme. The image processing section 120 outputs compressed moving image data obtained by compressing and encoding the moving image data as output moving image data to an outside of the camera 10 via a predetermined interface.

The output moving image data output from the camera 10 is supplied to, for example, a display device 30 and displayed.

The host device 20 includes the above-described image processing section 120, includes, for example, a Central Processing Unit (CPU), a memory, and a predetermined interface, and gives an instruction to the sensor 100. The host device 20 is connected with the sensor 100 via a predetermined communication interface such as an Inter-Integrated Circuit ($I^2C$) or a Serial Peripheral Interface (SPI). The host device 20 can give an instruction to the camera 10 via this communication interface. Furthermore, the host device 20 can further include a communication interface that can communicate with the outside of the camera 10.

The camera 10 according to each embodiment can be applied to usage for a purpose of monitoring such as a monitoring camera or a drive recorder. The camera 10 according to each embodiment is not limited thereto, and can also be applied to cameras that are mounted on smartphones, or general video cameras. Note that the usage of the camera 10 according to each embodiment is not limited thereto.

(Configuration Example of Pixel Array Section Applicable to Each Embodiment)

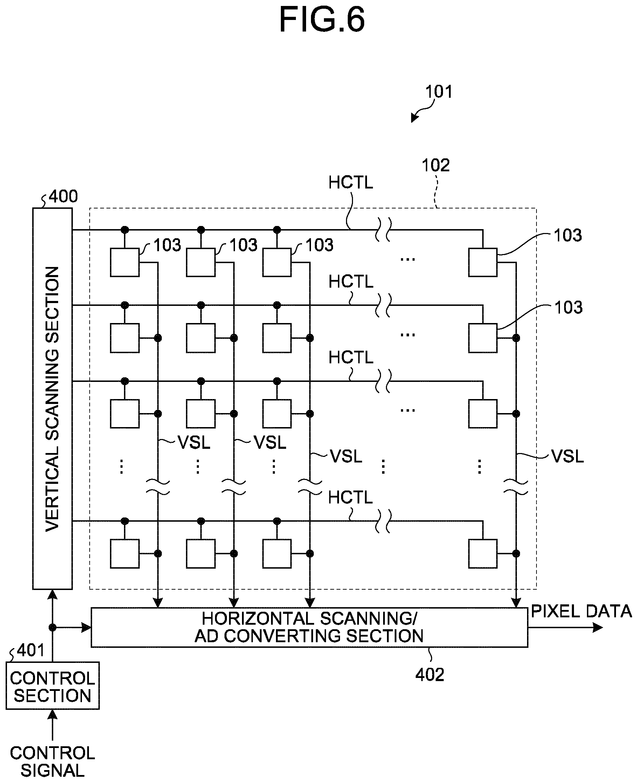

FIG. 6 is a block diagram depicting a configuration of an example of the pixel array section 101 applicable to each embodiment. In FIG. 6, the pixel array section includes a pixel array 102, a vertical scanning section 400, a horizontal scanning/AD converting section 402, and a control section 401.

The pixel array 102 includes a plurality of pixels 103 that each include an imaging element that generates a voltage corresponding to received light. As the imaging element, a photodiode can be used. In the pixel array 102, the plurality of pixels 103 are aligned in a matrix pattern in a horizontal direction (row direction) and a vertical direction (column direction). In the pixel array 102, alignment of the pixels 103 in the row direction is referred to as a line. An image (image data) of one frame is formed on the basis of pixel signals read from a predetermined number of lines in this pixel array 102. For example, in a case where an image of one frame is formed with 3000 pixels × 2000 lines, the pixel array 102 includes at least 2000 lines each including at least the 3000 pixels 103. In the pixel array 102, an area including the pixels 103 used to form an image of one frame is referred to as an effective pixel area. Furthermore, the image data formed in the pixel array 102 is RAW data.

Furthermore, in each row and column of each pixel 103 in the pixel array 102, a pixel signal line HCTL is connected with each row, and a vertical signal line VSL is connected with each column.

An end part of the pixel signal line HCTL that is not connected with the pixel array 102 is connected to the vertical scanning section 400. The vertical scanning section 400 transmits a plurality of control signals such as a drive pulse at a time when a pixel signal is read from the pixel 103 to the pixel array 102 via the pixel signal line HCTL in accordance with, for example, a control signal supplied from the control section 401. An end part of the vertical signal line VSL that is not connected with the pixel array 102 is connected to the horizontal scanning/AD converting section 402.

The horizontal scanning/AD converting section 402 includes an Analog to Digital (AD) converting section, an output section, and a signal processing section. The pixel signal read from the pixel 103 is transmitted to the AD converting section of the horizontal scanning/AD converting section 402 via the vertical signal line VSL.

Reading control of the pixel signal from the pixel 103 will be schematically described. The pixel signal is read from the pixel 103 by transferring charges accumulated in an imaging element by exposure to a Floating Diffusion (FD) layer, and converting the charges transferred in the floating diffusion layer into a voltage. The voltage obtained by converting the charge in the floating diffusion layer is output to the vertical signal line VSL via an amplifier.

More specifically, during exposure, the imaging element and the floating diffusion layer are placed in an off (open) state in the pixel 103, and charges generated in accordance with light incident by photoelectric conversion are accumulated in an imaging element. After the exposure is finished, the floating diffusion layer and the vertical signal line VSL are connected in accordance with a selection signal supplied via the pixel signal line HCTL. Furthermore, the floating diffusion layer is connected with a supply line of a power supply voltage VDD or a black level voltage in a short period of time in accordance with a reset pulse supplied via the pixel signal line HCTL, and the floating diffusion layer is reset. A voltage (referred to as a voltage P) of a reset level of the floating diffusion layer is output to the vertical signal line VSL. Thereafter, the imaging element and the floating diffusion layer are placed in an on (closed) state by a transfer pulse supplied via the pixel signal line HCTL, and the charge accumulated in the imaging element is transferred to the floating diffusion layer. A voltage (referred to as a voltage Q) corresponding to a charge amount of the floating diffusion layer is output to the vertical signal line VSL.

In the horizontal scanning/AD converting section 402, an AD converting section includes an AD converter that is provided per vertical signal line VSL, the pixel signal supplied from the pixel 103 via the vertical signal line VSL is subjected to AD conversion processing by the AD converter, and two digital values (values respectively corresponding to the voltage P and the voltage Q) for Correlated Double Sampling (CDS) processing for reducing noise are generated.

The two digital values generated by the AD converter are subjected to CDS processing by the signal processing section, and a pixel signal (pixel data) of a digital signal is generated. The generated pixel data is output from the pixel array section.

Under control of the control section 401, the horizontal scanning/AD converting section 402 performs selective scanning for selecting the AD converters per vertical signal line VSL in a predetermined order, and thereby sequentially outputs each digital value temporarily held by each AD converter to the signal processing section. The horizontal scanning/AD converting section 402 realizes this operation by a configuration including, for example, a shift register, an address decoder, and the like.

The control section 401 performs drive control of the vertical scanning section 400, the horizontal scanning/AD converting section 402, and the like in accordance with, for example, a control signal supplied from the sensor control section 110. The control section 401 generates various drive signals based on which the vertical scanning section 400 and the horizontal scanning/AD converting section 402 operate. The control section 401 generates a control signal for the vertical scanning section 400 to supply to each pixel 103 via the pixel signal line HCTL on the basis of a vertical synchronization signal or an external trigger signal supplied from an outside (e.g., the control section 401), and a horizontal synchronization signal. The control section 401 supplies the generated control signal to the vertical scanning section 400. Note that the control section 401 may be part of a function of the sensor control section 110.

On the basis of the control signal supplied from the control section 401, the vertical scanning section 400 supplies various signals including the drive pulse in the pixel signal line HCTL of a selected pixel row of the pixel array 102 per line to each pixel 103, and causes each pixel 103 to output the pixel signal to the vertical signal line VSL. The vertical scanning section 400 is configured using, for example, a shift register, an address decoder, and the like.

The pixel array section configured as described above is a column AD system Complementary Metal Oxide Semiconductor (CMOS) image sensor in which AD converters are arranged per column.

(Structure Example of Pixel Array Section Applicable to Each Embodiment)

Next, a structure example of the pixel array section 101 applicable to each embodiment will be schematically described.

A Complementary Metal Oxide Semiconductor (CMOS) Image Sensor (CIS) in which each section included in the pixel array section 101 is integrally formed using a CMOS can be applied to the pixel array section 101. The pixel array section 101 can be formed on one substrate. The pixel array section 101 is not limited thereto, and may be a stacked CIS in which a plurality of semiconductor chips are stacked and integrally formed. Note that the pixel array section 101 is not limited to this example, and may be another type of an optical sensor such as an infrared light sensor that performs imaging with infrared light.

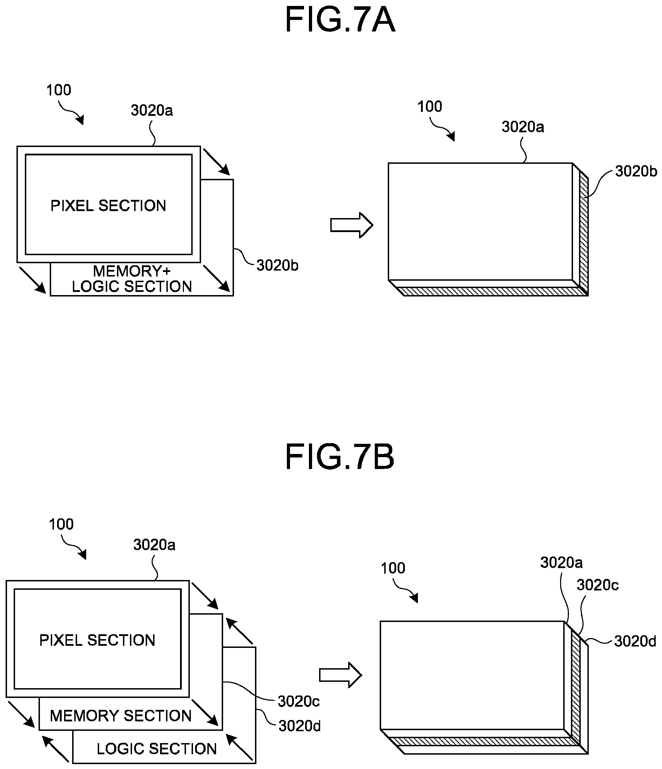

As an example, the pixel array section 101 can be formed by a stacked CIS of a two-layer structure in which semiconductor chips are stacked in two layers. FIG. 7A is a diagram depicting an example where the pixel array section 101 according to each embodiment is formed by the stacked CIS of the two-layer structure. In the structure of FIG. 7A, a pixel section 3020a is formed in a semiconductor chip of a first layer, and a memory+logic section 3020b is formed in a semiconductor chip of a second layer.

The pixel section 3020a includes the pixel array 102 in at least the pixel array section 101. The memory+logic section 3020b can include, for example, the vertical scanning section 400, the control section 401, the horizontal scanning/AD converting section 402, and the signature processing section 1000. The memory+logic section 3020b can also further include a memory that stores image data such as RAW data.

As depicted on a right side of FIG. 7A, the semiconductor chip of the first layer and the semiconductor chip of the second layer are bonded while being placed in electrical contact to configure the pixel array section 101 as one solid-state imaging element.

As another example, the pixel array section 101 can be formed by a three-layer structure in which semiconductor chips are stacked in three layers. FIG. 7B is a diagram depicting an example where the pixel array section 101 according to each embodiment is formed by a stacked CIS of a three-layer structure. In the structure of FIG. 7B, the pixel section 3020a is formed in the semiconductor chip of the first layer, a memory section 3020c is formed in the semiconductor chip of the second layer, and a logic section 3020d is formed in the semiconductor chip of the third layer. In this case, the logic section 3020d can include, for example, the vertical scanning section 400, the control section 401, the horizontal scanning/AD converting section 402, and the signature processing section 1000. Furthermore, the memory section 3020c can include a memory that stores image data such as RAW data.

As depicted on a right side of FIG. 7B, the semiconductor chip of the first layer, the semiconductor chip of the second layer, and the semiconductor chip of the third layer are bonded while being placed in electrical contact to configure the pixel array section 101 as one solid-state imaging element.

(2-2. Output Data Format Applicable to Each Embodiment)

Next, an output format of moving image data that is applicable to each embodiment will be described.

(First Example)

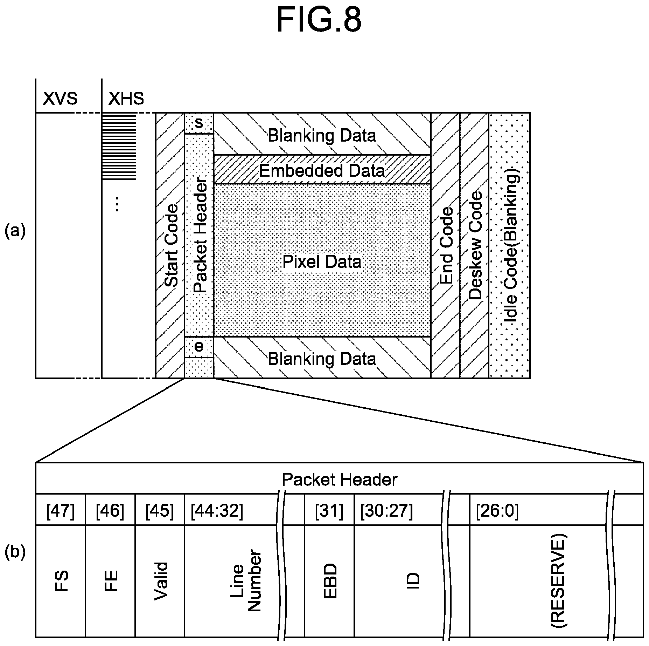

As the first example of an output format of moving image data that is applicable to each embodiment, a format defined in SLVS-EC (registered trademark) will be described. Note that SLVS-EC (registered trademark) is an abbreviation of "Scalable Low Voltage Signaling with Embedded Clock". FIG. 8 is a diagram schematically depicting the first example of the output format of the moving image data that is applicable to each embodiment.

Section (a) of FIG. 8 depicts data arrangement for moving image data of one frame according to the format of the first example. In section (a), the horizontal direction corresponds to the row direction (line), the vertical direction corresponds to the column direction, XVS represents a vertical synchronization signal, and XHS represents a horizontal synchronization signal. Furthermore, a left side of FIG. 8 depicts a head side of a line. That is, the moving image data is output from the left to the right per line in FIG. 8, and each line is output from a top to a bottom in FIG. 8.

In each line, a field [Start Code] and a field [Packet Header] are arranged from the head. The field [Start Code] indicates the head of each line. The field [Packet Header] will be described later.

A data field is arranged subsequently to the field [Packet Header]. Data fields are arranged in order of a field [Blanking Data], a field [Embedded Data], a field [Pixel Data], and a field [Blanking Data] from an upper end of a frame.

The field [Pixel Data] is a field in which each pixel data in a moving image of one frame is sequentially output line by line. Furthermore, the two fields [Blanking Data] correspond to a vertical blanking period of the moving image data. The field [Embedded Data] is a field in which arbitrary data can be embedded.

A field [End Code], a field [Deskew Code], and a field [Idle Code] are arranged subsequently to the data field. The field [End Code] indicates an end of each line. The field [Deskew Code] is a field for packet synchronization. The field [Idle Code] corresponds to a horizontal blanking period of each line.

Section (b) of FIG. 8 depicts contents of the field [Packet Header] depicted in section (a) in more detail. A data size of 48 bits from a 0th bit to a 47th bit is allocated to the field [Packet Header], and information indicating a line corresponding to the field [Packet Header] is stored therein.

A flag [FS] indicating a frame start is stored in the 47th bit in the field [Packet Header]. A flag [FE] indicating a frame end is stored in the 46th bit. A flag [Valid] indicating that the line is valid is stored in the 45th bit. A line number [Line Number] of this line is stored in the 44th bit to the 32th bit. A flag [EBD] indicating embedded data is stored in the 31th bit. Identification information [ID] indicating a type of this line is stored in the 30th bit to the 27th bit. Furthermore, the 26th bit to the 0th bit are reserved areas (RESERVE).

According to this format of the first example, for example, it is possible to indicate using the identification information [ID] that the line is a line associated with the signature data Sig.

(Second Example)

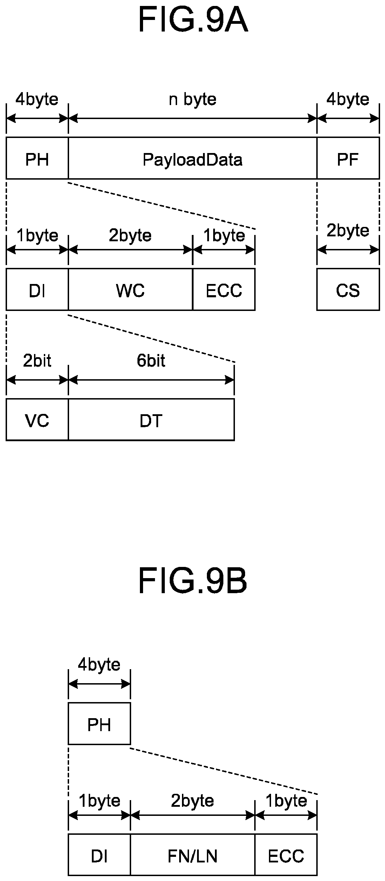

As the second example of an output format of moving image data that is applicable to each embodiment, a format defined in the MIPI (registered trademark) will be described. Note that the MIPI is an abbreviation of the "Mobile Industry Processor Interface". FIGS. 9A and 9B are diagrams schematically depicting the second example of the output format of the moving image data that is applicable to each embodiment. The MIPI (registered trademark) defines a long packet and a short packet as a data format of output data. Note that a left side is a head side of data in FIGS. 9A and 9B.

FIG. 9A depicts a data format of a long packet in the MIPI (registered trademark). An upper part of FIG. 9A depicts a packet structure. A packet of the long packet starts from a 4-byte packet header [PH], n-byte payload data (Payload Data) is subsequently arranged therein, and the packet ends at a 4-byte packet footer [PF]. Payload data is a main body portion of data transferred by this packet, and image data and signature data can be applied thereto.

A middle part of FIG. 9A depicts contents of the packet header [PH]. In the packet header [PH], a 1-byte data identifier [DI], a 2-byte word count [WC], and a 1-byte error correction code [ECC] are arranged in order from the head. A lower part of FIG. 9A depicts contents of the data identifier [DI]. In the data identifier [DI], a virtual channel [VC] and a data type [DT] are arranged in order from the head.

FIG. 9B depicts a data format of a short packet in the MIPI (registered trademark). An upper part of FIG. 9B depicts a packet structure. As described above, only the packet header [PH] is defined for the short packet. A lower part of FIG. 9B depicts contents of the packet header [PH]. In the packet header [PH], a 1-byte data identifier [DI], a 2-byte frame number or line number [FN/LN], and a 1-byte error correction code [ECC] are arranged in order from a head.

In the format according to the second example, for example, it is possible to indicate using the data identifier [DI] that the line is a line associated with the signature data Sig.

[3. Outline of Each Embodiment of Present Disclosure]

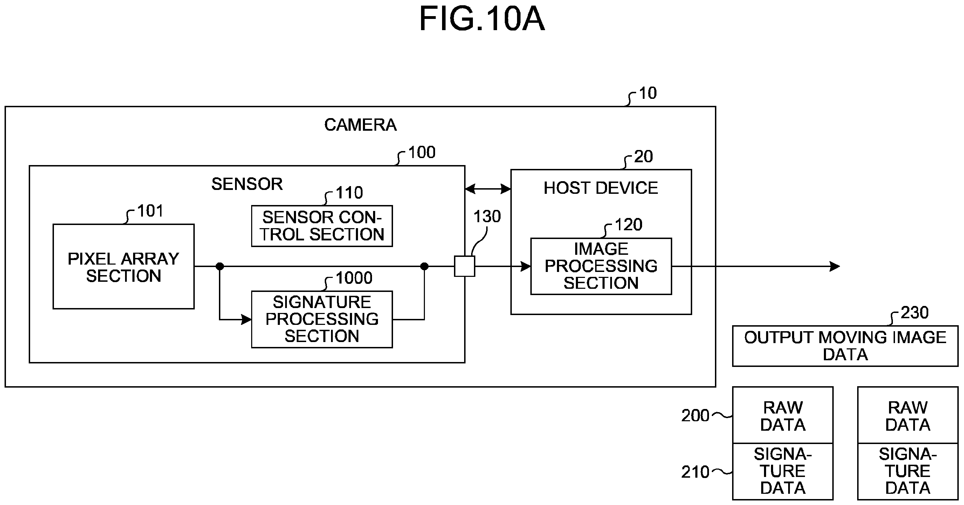

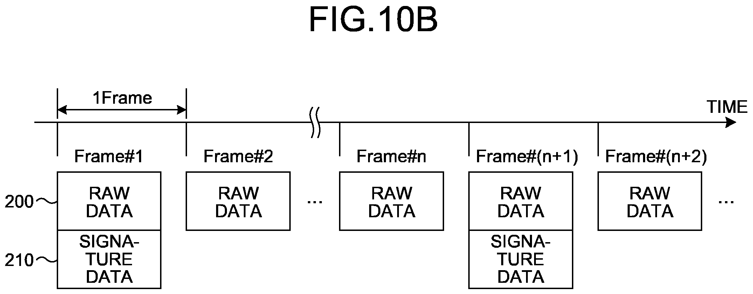

Next, the outline of each embodiment of the present disclosure will be described. FIGS. 10A and 10B are schematic diagrams for describing the outline of each embodiment. FIG. 10A schematically depicts a configuration of the camera 10 according to each embodiment.

In FIG. 10A, the camera 10 according to each embodiment includes the host device 20 and the sensor 100 similarly to the camera 10 depicted in FIG. 5. The host device 20 includes the image processing section 120. Furthermore, the sensor 100 includes the pixel array section 101 and the signature processing section 1000. The sensor control section 110 includes, for example, a processor and a memory, and controls an operation of the sensor 100 in accordance with programs stored in the memory. Furthermore, the host device 20 includes a CPU and a memory, and controls the entire operation of this camera 10 by, for example, giving an instruction to the sensor 100 in accordance with the programs stored in the memory.

In FIG. 10A, in the sensor 100, the signature processing section 1000 generates signature data 210 on the basis of image data (RAW data 200) obtained at a frame cycle by the pixel array section 101, and outputs the generated signature data 210 and the RAW data 200 obtained by the pixel array section 101 from an interface 130.

The signature data 210 and the RAW data 200 output from the interface 130 are supplied to the image processing section 120. The image processing section 120 performs compression encoding processing on the supplied RAW data 200, and outputs output moving image data 230 on the basis of the compressed and encoded RAW data 200. Furthermore, the image processing section 120 outputs the signature data 210 generated on the basis of the RAW data 200 of the output moving image data 230 before compression encoding as authenticity proof data for the RAW data 200.

FIG. 10B is a schematic diagram for describing data output from the interface 130 of the sensor 100. Note that FIG. 10B depicts a lapse of time in the right direction. In each embodiment, the signature processing section 1000 generates the signature data 210 every n frames (n is an integer of two or more) with respect to the RAW data 200 output at the frame cycle by the pixel array section 101. In other words, the signature processing section 1000 thins the RAW data 200 in units of thinning for the RAW data 200 output at the frame cycle by the pixel array section 101 using (n-1) frames as the units of thinning to generate the signature data 210.

In the example of FIG. 10B, the signature processing section 1000 generates the signature data 210 on the basis of, for example, the RAW data 200 of a first frame Frame #1, and does not generate the signature data 210 for second to nth frames Frame #2 to Frame #n. That is, the signature processing section 1000 generates the signature data 210 by thinning (n-1) frames of the frames Frame #2 to Frame #n.

Similarly, the signature processing section 1000 generates the signature data 210 on the basis of the RAW data 200 of a next frame Frame #(n+1), and does not generate the signature data 210 from a next frame Frame #(n+2) to a frame Frame #2n (not depicted).

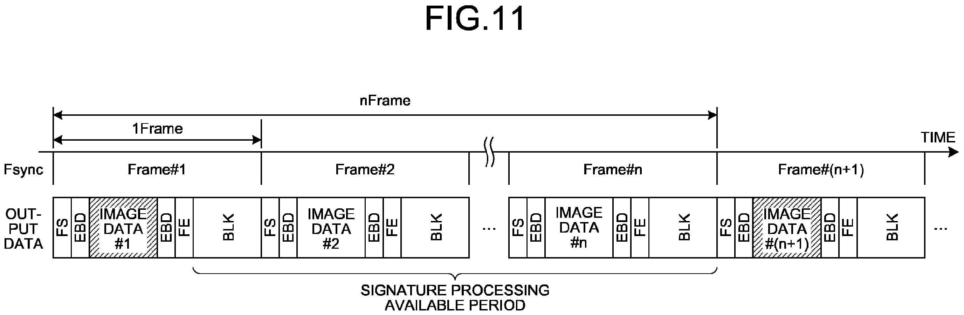

FIG. 11 is a diagram for describing a method for outputting the signature data 210 generated on the basis of a moving image according to each embodiment. Note that FIG. 11 depicts a lapse of time in the right direction. As depicted in FIG. 11, the signature processing section 1000 may complete generation and encryption processing of the signature data 210 on the basis of image data #1 (RAW data) of the first frame Frame #1 between a rear end of output of the image data #1 and a rear end of the nth frame Frame #n at maximum. Consequently, the signature processing section 1000 according to each embodiment can generate the signature data 210 spending a sufficiently long time compared to generation of signature data by the existing technique described with reference to FIGS. 4A and 4B.

Note that a value n in FIG. 11, that is, an interval for generating the signature data 210 is not fixed, and can be appropriately set to an interval at which generation and encryption of the signature data 210 can be completed. For example, it is conceivable to set the value n from the host device 20 to a register of the sensor 100.

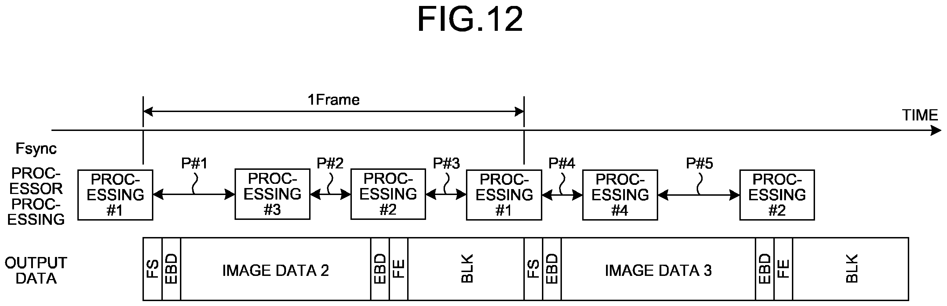

In a case where the signature processing section 1000 is configured as, for example, part of a function of the sensor control section 110, generation and encryption processing of the signature data 210 by the signature processing section 1000 need to be executed at a timing that does not compete with other processing of the sensor control section 110. FIG. 12 is a schematic diagram for describing a timing that is applicable to each embodiment and at which the signature processing section 1000 executes generation and encryption processing of the signature data 210.

FIG. 12 depicts a lapse of time in the right direction, and depicts, for example, a frame synchronization signal (signal Fsync), processor processing of the sensor control section 110, and output data from the interface 130 from a top.

According to the processor processing, processing #1 indicates processing for a next frame such as setting of an operation mode. Processing #2 indicates processing after image data is obtained such as exposure and white balance adjustment. These processing #1 and processing #2 are executed per frame. Processing #3 and processing #4 are processing other than the processing #1 and the processing #2, and are, for example, Memory Access Control (MAC) processing during register communication of the sensor 100, and temperature calculation processing in the sensor 100. The processing #3 and the processing #4 are interrupt processing that is not executed per frame.

For example, the sensor control section 110 controls generation and encryption processing of the signature data 210 by the signature processing section 1000 to execute in periods P#1, P#2, and... between the processing #1 to #4.

[4. First Embodiment of Present Disclosure]

Next, the first embodiment of the present disclosure will be described. The first embodiment is an example where a sensor outputs, from one interface, image data (RAW data 200) output from a pixel array section 101 and signature data 210 generated on the basis of the image data and encrypted.

(4-1. Configuration According to First Embodiment)

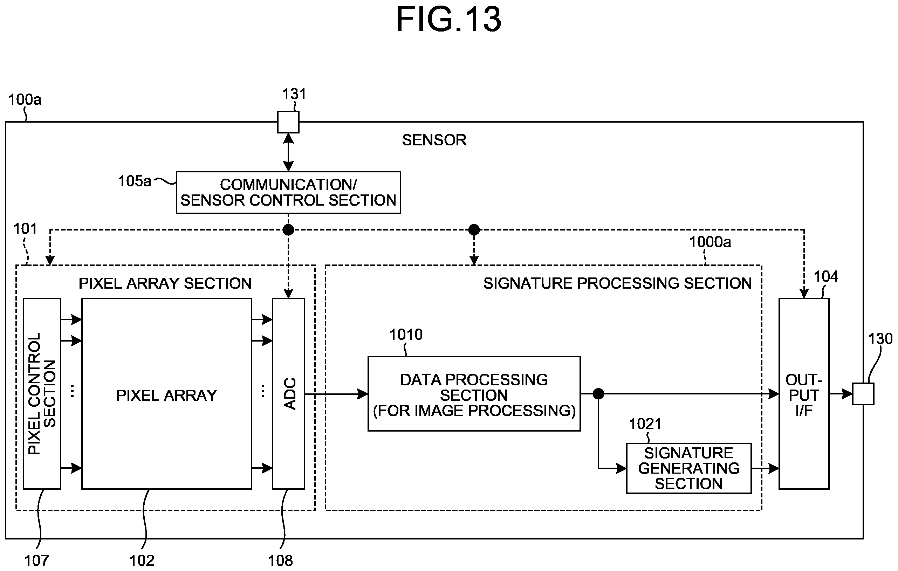

FIG. 13 is a block diagram depicting a configuration of an example of the sensor according to the first embodiment. In FIG. 13, a sensor 100a includes the pixel array section 101, a signature processing section 1000a, an output interface (I/F) 104, and a communication/sensor control section 105a.

The communication/sensor control section 105 communicates with a host device 20 via an interface 131. As the interface 131, an Inter-Integrated Circuit ($I^2C$) or a Serial Peripheral Interface (SPI) can be applied. The interface 131 is not limited thereto, and Improved Inter Integrated Circuits ($I^3C$) obtained by improving $I^2C$ can be also applied as the interface 131.

Furthermore, the communication/sensor control section 105 corresponds to a sensor control section 110 in FIG. 10A, and includes, for example, a processor and a memory, and the processor operates in accordance with programs stored in a memory, and controls an entire operation of this sensor 100a.

FIG. 13 depicts the example where the pixel array section 101 includes a pixel array 102, a pixel control section 107, and an Analog to Digital Converter (ADC) 108. Among these sections, the pixel control section 107 corresponds to, for example, a vertical scanning section 400 and an output section of a horizontal scanning/AD converting section 402 depicted in FIG. 6. Furthermore, the ADC 108 corresponds to an AD converting section of the horizontal scanning/AD converting section 402 depicted in FIG. 6.

The signature processing section 1000a includes a data processing section 1010 and a signature generating section 1021. The RAW data 200 output from the pixel array section 101 is input to the data processing section 1010. The data processing section 1010 performs predetermined data processing for performing image processing on the input RAW data 200 in an image processing section 120 (not depicted) at a subsequent stage). The RAW data 200 subjected to data processing by the data processing section 1010 is supplied to the output I/F 104 and the signature generating section 1021.

The signature generating section 1021 generates the signature data 210 on the basis of the RAW data 200 supplied from the data processing section 1010. For example, the signature generating section 1021 generates a hash value from the supplied RAW data 200, and uses the generated hash value as the signature data 210. The signature generating section 1021 is not limited thereto, and can use as the signature data 210 a value generated by another algorithm as long as the value makes it possible to uniquely specify the RAW data 200 and is difficult to estimate. The signature generating section 1021 encrypts the generated signature data 210 using a private key of a public key encryption scheme held in advance for the signature data 210, and supplies the encrypted signature data 210 to the output I/F 104.

Hereinafter, the encrypted signature data 210 is referred to simply as the "signature data 210" unless otherwise specified.

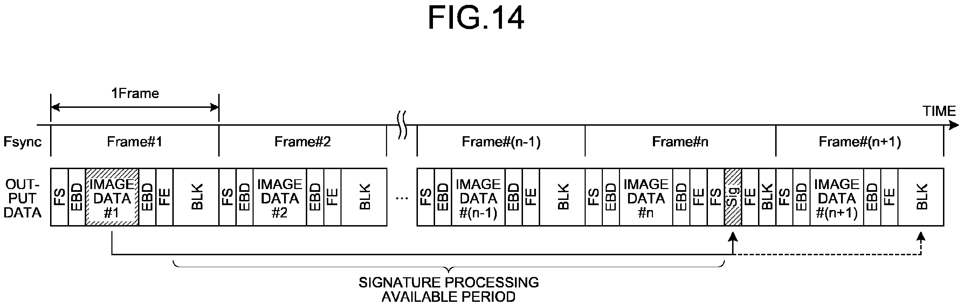

FIG. 14 is a diagram for describing a method for outputting the signature data 210 from the sensor 100a according to the first embodiment. Note that FIG. 14 depicts the signature data 210 as signature data Sig. In the example of FIG. 14, the output I/F 104 outputs, for example, the signature data Sig generated on the basis of image data #1 that is output in a first frame Frame #1 and is RAW data between second [FS] and [FE] in a frame Frame #n after image data #n of the nth frame Frame #n. In this way, the output I/F 104 functions as an output control section that controls output of the image data and the signature data Sig.

In this case, for example, a period from [FE] immediately after the image data #1 of the first frame Frame #1 is output to immediately after second [FS] of the nth frame Frame #n is a period in which generation and encryption processing of the signature data Sig can be performed.

(4-2. Output Position of Signature Data Applicable to First Embodiment)

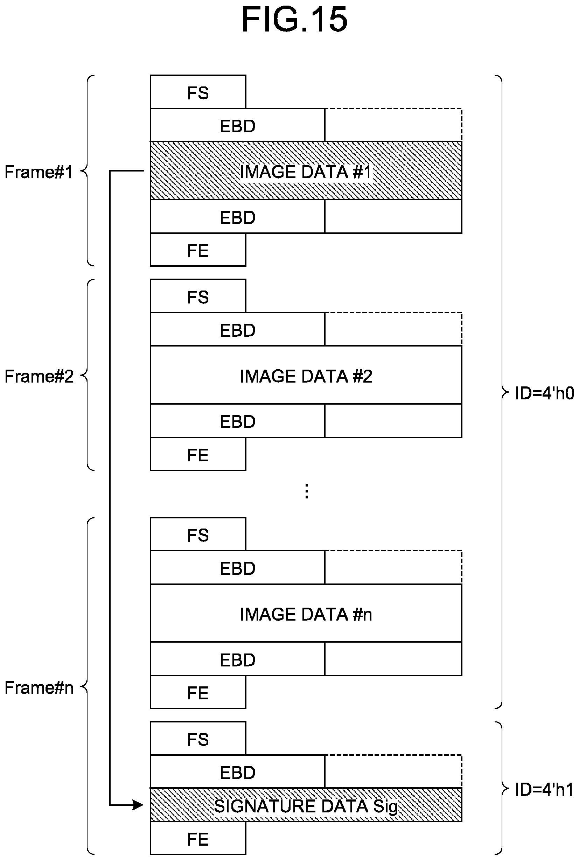

Next, a first example, a second example, and a third example of an output position of the signature data Sig will be described with reference to FIGS. 15, 16, and 17. Note that FIGS. 15 to 17 omit [BLK] and the like having a weak relationship with output of the signature data Sig.

(First Example of Output Position of Signature Data Sig)

FIG. 15 is a diagram depicting the first example of an output position of the signature data Sig applicable to the first embodiment. The first example depicted in this FIG. 15 corresponds to the output position of the signature data Sig in above described FIG. 14. That is, the output I/F 104 outputs the signature data Sig generated on the basis of the image data #1 output in the first frame Frame #1 between packets indicating a start and an end of the frame Frame #n (a second set of [FS] and [FE] in a case of SLVS-EC).

Here, the output I/F 104 makes a value of identification information [ID] in a packet header of each line different between an area that includes the signature data Sig and an area that does not include the signature data Sig. In, for example, the case of SLVS-EC, identification information [ID] = [4'h1] is set in the area (line) that includes the signature data Sig, and identification information [ID] = [4'h0] is set in an area (line) that does not include the signature data Sig. Note that [4'h] indicates that a number that follows is a value represented by four bits.

Note that, in the case of the MIPI, a value of a virtual channel [VC] is set to virtual channel [VC] = [2'h1] in the area that includes the signature data Sig, and is set to virtual channel [VC] = [2'h0] in the area that does not include the signature data Sig. Note that [2'h] indicates that a number that follows is a value represented by two bits. The value is not limited thereto, and, in the case of the MIPI, a value of a data type [DT] may indicate an area (line) that includes the signature data Sig and an area (line) that does not include the signature data Sig. For example, it is possible to switch which one of the virtual channel [VC] and the data type [DT] to use in accordance with a configuration of a side (e.g., host device 20) that receives an output from the sensor 100a.

(Second Example of Output Position of Signature Data Sig)

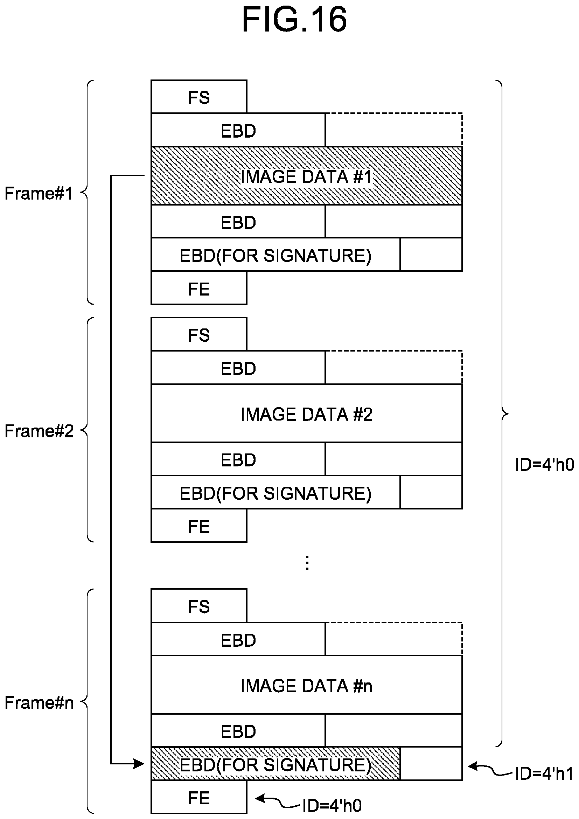

FIG. 16 is a diagram depicting the second example of the output position of the signature data Sig applicable to the first embodiment. In this second example, an embedding area for storing the signature data Sig is provided in the frame. In the case of, for example, SLVS-EC, by setting a flag [EBD] indicating embedded data of a 31th bit in a packet header [Packet Header], it is possible to set this line as an embedded area in which predetermined data can be embedded. In the example of FIG. 16, the output I/F 104 embeds the signature data Sig generated on the basis of the image data #1 output in the first frame Frame #1 in the embedding area provided for the signature data Sig after the image data #n of the frame Frame #n.

Similarly to the first example depicted in FIG. 15, the output I/F 104 makes the value of the identification information [ID] in the packet header of each line different between an area that includes the signature data Sig and an area that does not include the signature data Sig. In the case of, for example, SLVS-EC, identification information [ID] = [4'h1] is set in the area (line) that includes the signature data Sig, and identification information [ID] = [4'h0] is set in the area (line) that does not include the signature data Sig.

Note that, in this example, it is conceivable to take a measure to, for example, turn off the flag [EBD] in the line or set the flag [Valid] to a value indicating invalidity in a frame in which the signature data Sig is not output. The frame is not limited thereto, and the signature data Sig obtained in a previous frame may be output again. Furthermore, in a case where a frame in which the signature data Sig is not output is known, it is also conceivable to take no measure.

Note that, in the case of the MIPI, similar to the above, the value of the virtual channel [VC] or the data type [DT] can indicate the line that includes the signature data Sig, and the line that does not include the signature data Sig.

(Third Example of Output Position of Signature Data Sig)

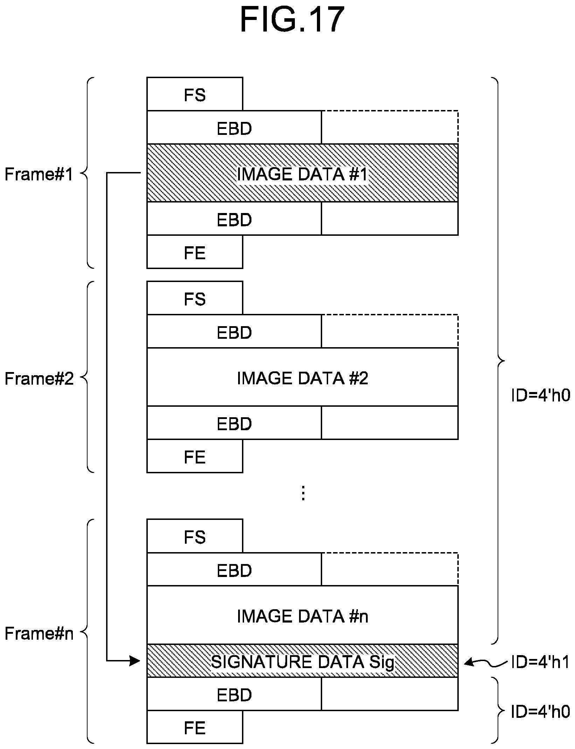

FIG. 17 is a diagram depicting the third example of the output position of the signature data Sig applicable to the first embodiment. In this third example, the signature data Sig is output as line data from a line whose header information is differed from a line of normal image data. In the case of, for example, SLVS-EC, it is conceivable to make a value of a line number [Line Number] in the packet header [Packet Header] between the line that includes the signature data Sig and the line that does not include the signature data Sig. Furthermore, in the case of the MIPI, it is conceivable to make the value of the virtual channel [VC] or the data type [DT] different between the line that includes the signature data Sig and the line that does not include the signature data Sig.

Similarly to the first example depicted in FIG. 15, the output I/F 104 makes the value of the identification information [ID] in the packet header of each line different between the line that includes the signature data Sig and the line that does not include the signature data Sig. In the case of, for example, SLVS-EC, identification information [ID] = [4'h1] is set to a line that includes the signature data Sig, and identification information [ID] = [4'h0] is set to a line that does not include the signature data Sig.

Note that the timing to output the signature data Sig has been described above as a last frame in units of thinning. In this case, when the signature data Sig is generated every n frames of the RAW data 200, and the units of thinning are (n-1) frames, the signature data Sig generated on the basis of the RAW data 200 output in a first frame is output in an nth frame.

An output timing of the signature data Sig is not limited to this example. For example, the output I/F 104 may output the signature data Sig in a frame next to a last frame in the units of thinning. In this case, as indicated by a dotted arrow in FIG. 14, it is conceivable to output the signature data Sig at, for example, a timing of [BLK] at a rear end of the next frame. Furthermore, for example, the output I/F 104 may output the signature data Sig in a frame corresponding to the timing at which calculation of the signature data Sig is finished. In this case, the output I/F 104 outputs the signature data Sig from a frame next to the frame of the RAW data 200 corresponding to the signature data Sig to an end of (n-1) frames that are units of thinning. Furthermore, for example, the output I/F 104 may output the signature data Sig in, for example, a frame designated in advance on the basis of the frame of the RAW data 200 corresponding to, for example, the signature data Sig.

[5. Second Embodiment of Present Disclosure]

Next, the second embodiment of the present disclosure will be described. The second embodiment is an example where a sensor outputs, from different interfaces, image data (RAW data 200) output from a pixel array section 101 and signature data 210 generated and encrypted on the basis of the image data.

(5-1. Outline of Second Embodiment)

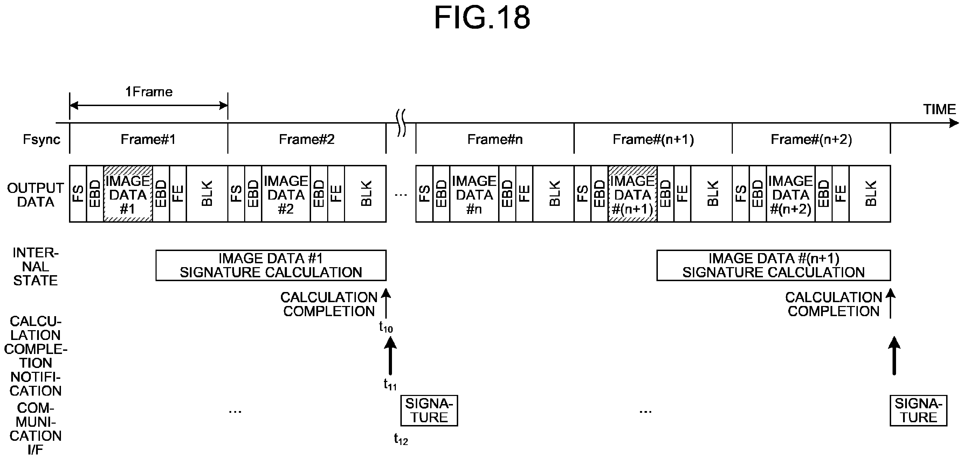

FIG. 18 is a diagram for describing the outline of the second embodiment. Note that, hereinafter, a description will be made with reference to a configuration of a sensor 100a in FIG. 13 for the sake of description. FIG. 18 depicts a lapse of time in the right direction, and depicts a frame synchronization signal (signal Fsync), output data from an interface 133, an internal state of a signature processing section 1000a, a completion notification of signature data generation calculation by the signature processing section 1000a, and an output of a communication I/F (interface 131) from the top.

When, for example, the interface 130 completes outputting image data #1 that is RAW data, a signature generating section 1021 starts calculation of generation of the signature data Sig (generation and encryption of the signature data Sig) on the basis of the image data #1. When completing generation and calculation of the signature data Sig at a

time $t_{10}$, the signature generating section 1021 notifies a communication/sensor control section 105a of completion of the calculation at a time $t_{11}$ immediately after the time $t_{10}$. The signature data Sig is obtained by a host device 20 via the interface 131 at a time $t_{12}$ that is a predetermined time from the time $t_{11}$.

Thus, the signature data Sig can be obtained from the interface 131, so that processing of embedding the signature data Sig in output moving image data 230 output from the interface 130 becomes unnecessary, and it is possible to reduce a load of the output I/F 104.

Note that the signature generating section 1021 can add, to the generated signature data Sig, information indicating the RAW data 200 corresponding to the signature data Sig. The information indicating the RAW data 200 may be added to this signature data Sig by the communication/sensor control section 105a.

By the way, in a case where an I2C or an SPI is used as the interface 131, the sensor 100a is a slave side. Therefore, according to specifications of these communication interfaces, the sensor 100a side cannot transmit a notification of signature calculation completion to a communication destination of the interface 131.

Therefore, in the second embodiment, the generated signature data Sig is stored in a storage section such as a register included in the communication/sensor control section 105a to enable the host device 20 to obtain the signature data Sig stored in the storage section via the interface 131. As a specific configuration therefor, the second embodiment proposes a following first specific example and second specific example.

(5-2. First Specific Example of Second Embodiment)

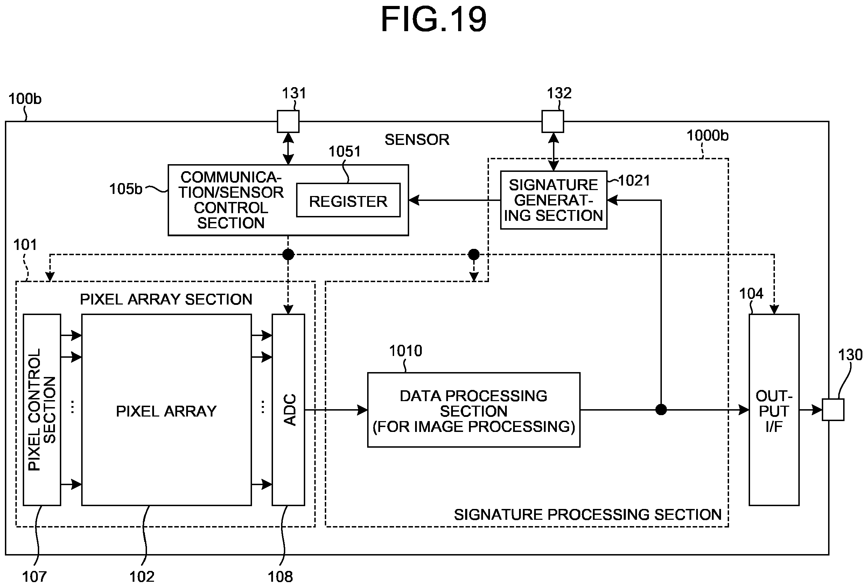

First, the first specific example of the second embodiment will be described. FIG. 19 is a block diagram depicting a configuration of an example of a sensor according to the first specific example of the second embodiment.

In this first specific example, as depicted in FIG. 19, a sensor 100b is provided with an interrupt signal port 132 for transmitting an interrupt signal to an outside (e.g., the host device 20). In a signature processing section 1000b, the signature generating section 1021 outputs an interrupt signal to this interrupt signal port 132. The interrupt signal port 132 and the interface 131 are connected to the host device 20 (not depicted).

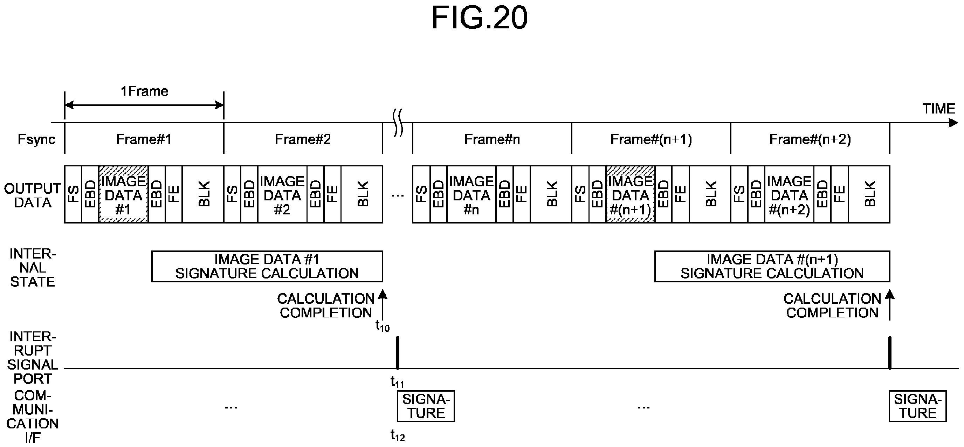

FIG. 20 is a diagram depicting an example of a signature data calculation completion notification method according to the first specific example of the second embodiment. FIG. 20 depicts a lapse of time in a right direction, and depicts a frame synchronization signal (signal Fsync), output data from the interface 133, an internal state of the signature processing section 1000b, an interrupt signal output from the interrupt signal port 132, and an output of a communication I/F (interface 131) from the top.

When completing generation of the signature data Sig at the time $t_{10}$, the signature generating section 1021 stores the generated signature data Sig in a register 1051 that is a storage section included in a communication/sensor control section 105b. Furthermore, accompanying completion of generation of the signature data Sig at the time $t_{10}$, the signature generating section 1021 outputs an interrupt signal indicating calculation completion from the interrupt signal port 132 at the time $t_{11}$ immediately after the time t10.

In response to this interrupt signal, the host device 20 connected to the interrupt signal port 132 communicates with the communication/sensor control section 105b via the interface 131, and starts obtaining the signature data Sig from the register 1051 at the time $t_{12}$ that is a predetermined time after the time $t_{11}$. For example, the host device 20 knows in advance a register address at which the signature data Sig is stored in the register 1051, and reads the signature data Sig from the register 1051 on the basis of this register address.

Thus, in the first specific example of the second embodiment, the output I/F 104, the signature generating section 1021, and the communication/sensor control section 105b constitute an output control section that controls output of the image data and the signature data Sig.

Note that, in the example of FIG. 20, the interrupt signal port 132 outputs an interrupt signal that is a pulse signal, yet is not limited to this example. For example, the signature generating section 1021 may output interruption completion as a state. For example, it is conceivable that the signature generating section 1021 sets the interrupt signal port 132 to a high state at a time of calculation completion (time $t_{10}$), and sets the interrupt signal port 132 to a low state at a timing (time $t_{11}$) at which the signature data Sig can be read from the register 1051.

(5-3. Second Specific Example of Second Embodiment)

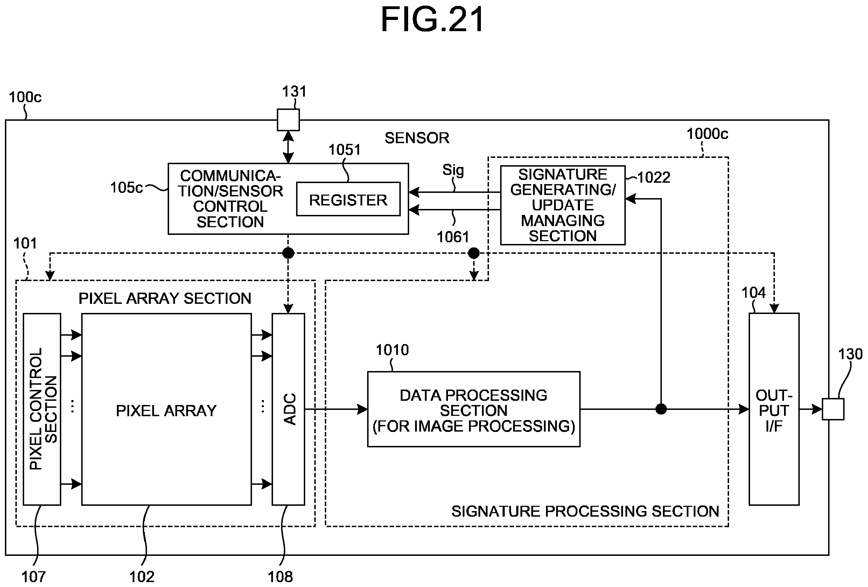

Next, the second specific example of the second embodiment will be described. FIG. 21 is a block diagram depicting a configuration of an example of a sensor according to the second specific example of the second embodiment.

In this second specific example, as depicted in FIG. 21, in a sensor 100c, a signature processing section 1000c is provided with a signature generating/update managing section 1022 instead of the signature generating section 1021. Similarly to the above-described signature generating section 1021, the signature generating/update managing section 1022 generates and encrypts the signature data Sig on the basis of RAW data supplied from a data processing section 1010, and stores the generated signature data Sig in the register 1051 included in a communication/sensor control section 105c.

At the same time, the signature generating/update managing section 1022 transmits to the communication/sensor control section 105c state data 1061 indicating that the signature data Sig has been newly stored in the register 1051. The communication/sensor control section 105c updates information indicating a state of the register 1051 in accordance with this state data 1061. This information indicating the state of this register 1051 is polled from the host device 20 (not depicted) via the interface 131. When detecting a change in the state of the register 1051 on the basis of a polling result, the host device 20 accesses the register 1051 via the interface 131, and obtains the signature data Sig stored in the register 1051.

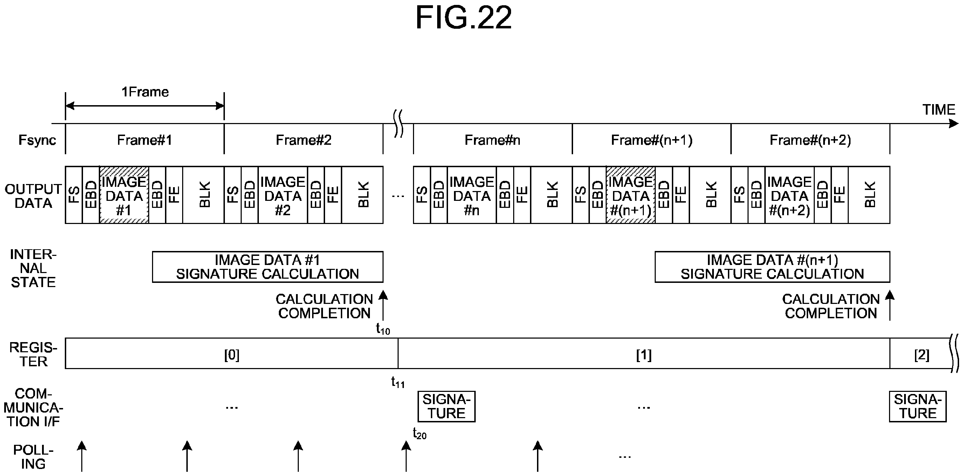

FIG. 22 is a diagram depicting an example of a signature data calculation completion notification method according to the second specific example of the second embodiment. FIG. 20 depicts a lapse of time in a right direction, and depicts a frame synchronization signal (signal Fsync), output data from the interface 133, an internal state of the signature processing section 1000c, information (count value) indicating the state of the register 1051, an output of a communication I/F (interface 131), and polling from the host device 20.

When completing generation of the signature data Sig at the time $t_{10}$, the signature generating/update managing section 1022 stores the generated signature data Sig in the register 1051 that is storage section included in the communication/sensor control section 105c, and transmits to the communication/sensor control section 105c the state data 1061 indicating that the signature data Sig has been newly stored in the register 1051.

The communication/sensor control section 105c updates the information indicating the state of the register 1051 in accordance with this state data 1061. In the example of FIG. 22, the communication/sensor control section 105c includes a counter, and increments a count value of a counter by 1 when receiving from the signature generating/update managing section 1022 the state data 1061 indicating that the signature data Sig has been newly stored in the register 1051. In the example of FIG. 22, the count value indicating the state of the register is incremented from [0] to [1] before and after the time $t_{11}$. This count value is written in, for example, the register 1051.

On the other hand, the host device 20 connected to the interface 131 polls the register 1051 via the interface 131 at a predetermined cycle, and obtains a count value indicating the state of the register. When the obtained count value is different from a previously obtained count value, the host device 20 starts reading the signature data Sig from the register 1051 at time $t_{20}$ assuming that the new signature data Sig has been newly stored in the register 1051.

As described above, in the second specific example of the second embodiment, the output I/F 104, the signature generating/update managing section 1022, and the communication/sensor control section 105c constitute an output control section that controls output of the image data and the signature data Sig.

Note that, in the above description, the communication/sensor control section 105c uses the count value incremented in accordance with the state data 1061 as the information indicating the state of the register 1051, yet is not limited to this example. For example, the communication/sensor control section 105c may indicate the state of the register 1051 when, for example, a high state and a low state are switched in accordance with the state data 1061.

[6. Third Embodiment of Present Disclosure]

Next, the third embodiment of the present disclosure will be described. The third embodiment of the present disclosure is an example where signature data Sig is generated for an image data group including a plurality of items of image data. As a configuration of a sensor, both of a sensor 100a according to the first embodiment and sensors 100b and 100c according to the first and second specific examples of the second embodiment are applicable. Hereinafter, description will be given assuming that the sensor 100a according to the first embodiment is applied to the third embodiment.

Here, image data imaged by distance measurement processing of an indirect Time of Flight (iToF) method is applied as an example of the image data group. The iToF method is a technique of irradiating a measurement target object with light source light (e.g., laser light of an infrared range) modulated by, for example, Pulse Width Modulation (PWM), receiving this reflected light by a light receiving element, and performing distance measurement on the measurement target object on the basis of a phase difference of the received reflected light. In an example, during imaging of iToF, light quantity values $C_0$, $C_{90}$, $C_{180}$, and $C_{270}$ are respectively obtained from respective phases of a phase of 0°, a phase of 90°, a phase of 180°, and a phase of 270° that differ by 90° in phase with respect to light emitted from a light source.

As shown in following equations (2) and (3), a difference I and a difference Q are obtained on the basis of a combination of light quantity values whose phases differ by 180° among these light quantity values $C_0$, $C_{90}$, $C_{180}$, and $C_{270}$.

$$I = C_0 - C_{180} \qquad\qquad (2)$$

$$Q = C_{90} - C_{270} \qquad (3)$$

On the basis of these differences I and Q, a phase difference phase is calculated in accordance with following equation (4). Note that the phase difference phase is defined in a range of ($0 \leq$ phase $< 2\pi$) in equation (4).

$$phase = \tan^{-1}(Q/I) \qquad (4)$$

Distance information Depth is calculated in accordance with following equation (5) using the phase difference phase and a predetermined coefficient range.

$$Depth = (phase \times range)/2\pi \qquad (5)$$

In the above-described example, it is assumed that image data (iToF data 0°) by exposure at a phase of 0° is obtained in a frame Frame #1, and image data (iToF data 180°) by exposure at a phase of 180° is obtained in a next frame Frame #2. Furthermore, it is assumed that image data (iToF 90° by exposure at a phase of 90° is obtained in a frame Frame #3, and image data (iToF 270°) by exposure at a phase of 270° is obtained in a next frame Frame #4 (not depicted).

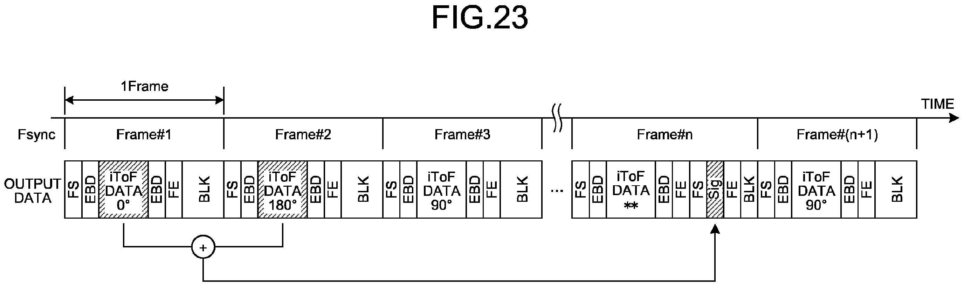

FIG. 23 is a diagram depicting an example of generation and output of signature data according to the third embodiment. In the example of FIG. 23, a signature generating section 1021 integrates, for example, the iToF data 0° and the iToF data 180° to form one image data group. The signature generating section 1021 generates the signature data Sig on the basis of the iToF data 0° and the iToF data 180° included in this image data group. In the example of FIG. 23, the signature generating section 1021 integrates the iToF data 0° and the iToF data 180° to generate one item of the signature data Sig. The generated signature data Sig is output to, for example, a predetermined position of a frame Frame #n.

Similarly, for the iToF data 90° and the iToF data 270°, the signature generating section 1021 integrates the iToF data 90° and the iToF data 270° to form one image data group, and generates the signature data Sig on the basis of the iToF data 90° and the iToF data 270° included in this image data group. Although not depicted, the generated signature data Sig is output to, for example, a predetermined position of a frame Frame #(n+2).

The signature data Sig is not limited thereto, and the signature generating section 1021 may generate the signature data Sig for each of a plurality of items of image data included in one image data group. In this case, the plurality of items of generated signature data Sig can be output to the same frame.

Thus, by generating the signature data Sig for an image data group on the basis of image data that has a meaning in a plurality of frames, it is possible to enhance reliability of processing using the image data of the plurality of these frames.

Note that, in the above description, the method for generating and outputting the signature data Sig according to the third embodiment is applied to the image data obtained by the distance measurement processing of the iToF method, yet is not limited to this example. That is, the image data group may include other types of image data as long as the image data has a meaning in a plurality of frames. Furthermore, in the above description, two items of image data are integrated into one image data group, yet are not limited to this example, and three or more items of image data may be integrated into one image data group.

[7. Fourth Embodiment of Present Disclosure]

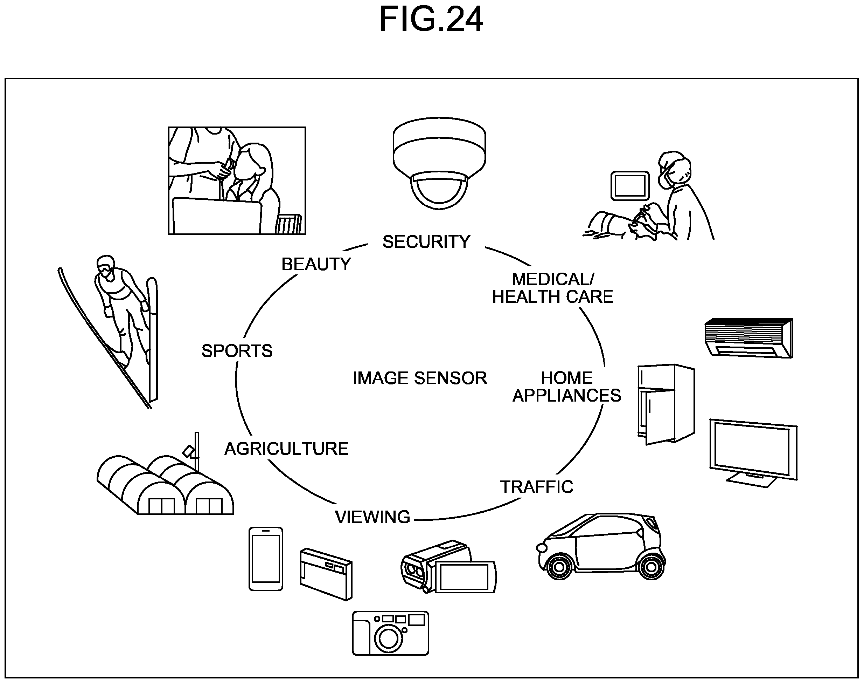

Next, application examples of the first embodiment, the second embodiment, and the third embodiment of the present disclosure will be described as a seventh embodiment of the present disclosure. FIG. 24 is a diagram depicting a use example where a camera 10 to which the above-described first embodiment, second embodiment, and third embodiment are applicable is used according to the fourth embodiment.

The above-described camera 10 can be used in various cases where, for example, light such as visible light, infrared light, ultraviolet light, and X-rays as described below are sensed.

·A device such as a digital camera or a portable device with a camera function that photographs images to be used for viewing.

·A device used for traffic for achieving safe driving such as automatic stop, recognition of a driver's condition, and the like such as a vehicle-mounted sensor that photographs a front, a rear, surroundings, an inside of a vehicle, and the like of a car, a monitoring camera that monitors traveling vehicles and roads, and a distance measuring sensor that measures distances between vehicles and the like.

·A device used for home appliances such as TVs, refrigerators, and air conditioners to photograph user's gestures and operate the device in accordance with the gestures.

·A device used for medical or health care such as endoscopes or devices that photograph veins by receiving infrared light.

·A device used for security such as a monitoring camera for crime prevention or a camera for use in person authentication.

·A device used for beauty such as a skin measurement instrument for photographing skin or a microscope for photographing a scalp.

·A device used for sports such as an action camera or a wearable camera for use in sports.

·A device used for agriculture such as a camera for monitoring conditions of fields and crops.

(Application Example to Mobile Body)

Next, another application example of the technique according to the present disclosure will be described. The technique according to the present disclosure may be further applied to devices mounted on various mobile bodies such as cars, electric vehicles, hybrid electric vehicles, motorcycles, bicycles, personal mobilities, airplanes, drones, ships, and robots.

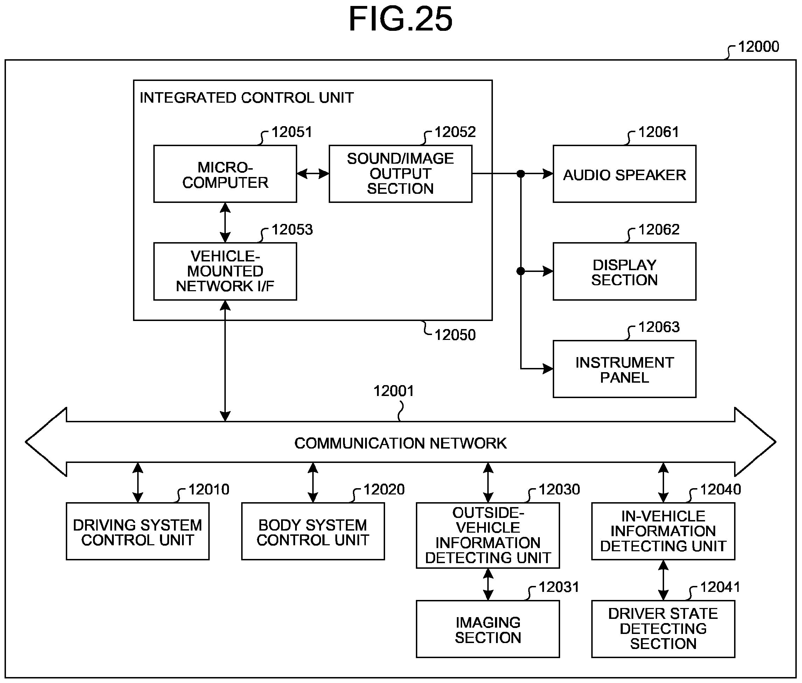

FIG. 25 is a block diagram depicting an example of a schematic configuration of a vehicle control system as an example of a mobile body control system to which the technology according to an embodiment of the present disclosure can be applied.

A vehicle control system 12000 includes a plurality of electronic control units connected to each other via a communication network 12001. In the example depicted in FIG. 25, the vehicle control system 12000 includes a driving system control unit 12010, a body system control unit 12020, an outside-vehicle information detecting unit 12030, an in-vehicle information detecting unit 12040, and an integrated control unit 12050. In addition, a microcomputer 12051, a sound/image output section 12052, and a vehicle-mounted network interface (I/F) 12053 are illustrated as a functional configuration of the integrated control unit 12050.

The driving system control unit 12010 controls the operation of devices related to the driving system of the vehicle in accordance with various kinds of programs. For example, the driving system control unit 12010 functions as a control device for a driving force generating device for generating the driving force of the vehicle, such as an internal combustion engine, a driving motor, or the like, a driving force transmitting mechanism for transmitting the driving force to wheels, a steering mechanism for adjusting the steering angle of the vehicle, a braking device for generating the braking force of the vehicle, and the like.

The body system control unit 12020 controls the operation of various kinds of devices provided to a vehicle body in accordance with various kinds of programs. For example, the body system control unit 12020 functions as a control device for a keyless entry system, a smart key system, a power window device, or various kinds of lamps such as a headlamp, a backup lamp, a brake lamp, a turn signal, a fog lamp, or the like. In this case, radio waves transmitted from a mobile device as an alternative to a key or signals of various kinds of switches can be input to the body system control unit 12020. The body system control unit 12020 receives these input radio waves or signals, and controls a door lock device, the power window device, the lamps, or the like of the vehicle.

The outside-vehicle information detecting unit 12030 detects information about the outside of the vehicle including the vehicle control system 12000. For example, the outside-vehicle information detecting unit 12030 is connected with an imaging section 12031. The outside-vehicle information detecting unit 12030 makes the imaging section 12031 image an image of the outside of the vehicle, and receives the imaged image. On the basis of the received image, the outside-vehicle information detecting unit 12030 may perform processing of detecting an object such as a human, a vehicle, an obstacle, a sign, a character on a road surface, or the like, or processing of detecting a distance thereto. For example, the outside-vehicle information detecting unit 12030 performs image processing on the received image, and performs object detection processing and distance detection processing on the basis of a result of the image processing.

The imaging section 12031 is an optical sensor that receives light, and which outputs an electric signal corresponding to a received light amount of the light. The imaging section 12031 can output the electric signal as an image, or can output the electric signal as information about a measured distance. In addition, the light received by the imaging section 12031 may be visible light, or may be invisible light such as infrared rays or the like.

The in-vehicle information detecting unit 12040 detects information about the inside of the vehicle. The in-vehicle information detecting unit 12040 is, for example, connected with a driver state detecting section 12041 that detects the state of a driver. The driver state detecting section 12041, for example, includes a camera that images the driver. On the basis of detection information input from the driver state detecting section 12041, the in-vehicle information detecting unit 12040 may calculate a degree of fatigue of the driver or a degree of concentration of the driver, or may determine whether the driver is dozing.

The microcomputer 12051 can calculate a control target value for the driving force generating device, the steering mechanism, or the braking device on the basis of the information about the inside or outside of the vehicle which information is obtained by the outside-vehicle information detecting unit 12030 or the in-vehicle information detecting unit 12040, and output a control command to the driving system control unit 12010. For example, the microcomputer 12051 can perform cooperative control intended to implement functions of an advanced driver assistance system (ADAS) which functions include collision avoidance or shock mitigation for the vehicle, following driving based on a following distance, vehicle speed maintaining driving, a warning of collision of the vehicle, a warning of deviation of the vehicle from a lane, or the like.

In addition, the microcomputer 12051 can perform cooperative control intended for automated driving, which makes the vehicle to travel automatedly without depending on the operation of the driver, or the like, by controlling the driving force generating device, the steering mechanism, the braking device, or the like on the basis of the information about the outside or inside of the vehicle which information is obtained by the outside-vehicle information detecting unit 12030 or the in-vehicle information detecting unit 12040.

In addition, the microcomputer 12051 can output a control command to the body system control unit 12020 on the basis of the information about the outside of the vehicle which information is obtained by the outside-vehicle information detecting unit 12030. For example, the microcomputer 12051 can perform cooperative control intended to prevent a glare by controlling the headlamp so as to change from a high beam to a low beam, for example, in accordance with the position of a preceding vehicle or an oncoming vehicle detected by the outside-vehicle information detecting unit 12030.

The sound/image output section 12052 transmits an output signal of at least one of a sound and an image to an output device capable of visually or auditorily notifying information to an occupant of the vehicle or the outside of the vehicle. In the example of FIG. 25, an audio speaker 12061, a display section 12062, and an instrument panel 12063 are illustrated as the output device. The display section 12062 may, for example, include at least one of an on-board display and a head-up display.

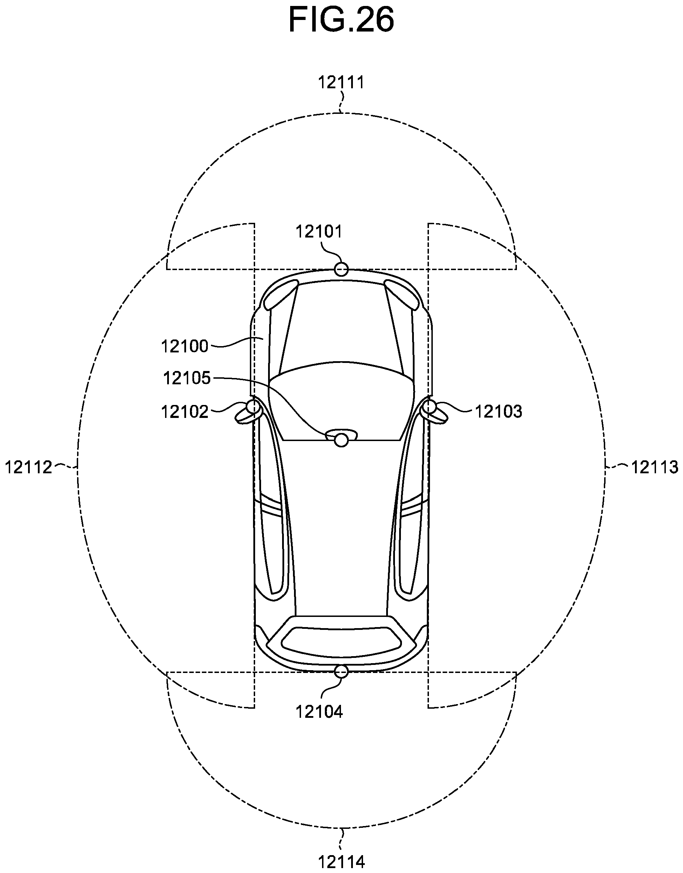

FIG. 26 is a diagram depicting an example of the installation position of the imaging section 12031. In FIG. 26, a vehicle 12100 includes imaging sections 12101, 12102, 12103, 12104, and 12105 as the imaging section 12031.

The imaging sections 12101, 12102, 12103, 12104, and 12105 are, for example, disposed at positions on a front nose, sideview mirrors, a rear bumper, and a back door of the vehicle 12100 as well as a position on an upper portion of a windshield within the interior of the vehicle. The imaging section 12101 provided to the front nose and the imaging section 12105 provided to the upper portion of the windshield within the interior of the vehicle obtain mainly an image of the front of the vehicle 12100. The imaging sections 12102 and 12103 provided to the sideview mirrors obtain mainly an image of the sides of the vehicle 12100. The imaging section 12104 provided to the rear bumper or the back door obtains mainly an image of the rear of the vehicle 12100. Images obtained by the imaging sections 12101 and 12105 are used mainly to detect a preceding vehicle, a pedestrian, an obstacle, a signal, a traffic sign, a lane, or the like.

Incidentally, FIG. 25 depicts an example of photographing ranges of the imaging sections 12101 to 12104. An imaging range 12111 represents the imaging range of the imaging section 12101 provided to the front nose. Imaging ranges 12112 and 12113 respectively represent the imaging ranges of the imaging sections 12102 and 12103 provided to the sideview mirrors. An imaging range 12114 represents the imaging range of the imaging section 12104 provided to the rear bumper or the back door. A bird's-eye image of the vehicle 12100 as viewed from above is obtained by superimposing image data imaged by the imaging sections 12101 to 12104, for example.

At least one of the imaging sections 12101 to 12104 may have a function of obtaining distance information. For example, at least one of the imaging sections 12101 to 12104 may be a stereo camera constituted of a plurality of imaging elements, or may be an imaging element having pixels for phase difference detection.

For example, the microcomputer 12051 can determine a distance to each three-dimensional object within the imaging ranges 12111 to 12114 and a temporal change in the distance (relative speed with respect to the vehicle 12100) on the basis of the distance information obtained from the imaging sections 12101 to 12104, and thereby extract, as a preceding vehicle, a nearest three-dimensional object in particular that is present on a traveling path of the vehicle 12100 and which travels in substantially the same direction as the vehicle 12100 at a predetermined speed (for example, equal to or more than 0 km/hour). Further, the microcomputer 12051 can set a following distance to be maintained in front of a preceding vehicle in advance, and perform automatic brake control (including following stop control), automatic acceleration control (including following start control), or the like. It is thus possible to perform cooperative control intended for automated driving that makes the vehicle travel automatedly without depending on the operation of the driver or the like.

For example, the microcomputer 12051 can classify three-dimensional object data on three-dimensional objects into three-dimensional object data of a two-wheeled vehicle, a standard-sized vehicle, a large-sized vehicle, a pedestrian, a utility pole, and other three-dimensional objects on the basis of the distance information obtained from the imaging sections 12101 to 12104, extract the classified three-dimensional object data, and use the extracted three-dimensional object data for automatic avoidance of an obstacle. For example, the microcomputer 12051 identifies obstacles around the vehicle 12100 as obstacles that the driver of the vehicle 12100 can recognize visually and obstacles that are difficult for the driver of the vehicle 12100 to recognize visually. Then, the microcomputer 12051 determines a collision risk indicating a risk of collision with each obstacle. In a situation in which the collision risk is equal to or higher than a set value and there is thus a possibility of collision, the microcomputer 12051 outputs a warning to the driver via the audio speaker 12061 or the display section 12062, and performs forced deceleration or avoidance steering via the driving system control unit 12010. The microcomputer 12051 can thereby assist in driving to avoid collision.

At least one of the imaging sections 12101 to 12104 may be an infrared camera that detects infrared rays. The microcomputer 12051 can, for example, recognize a pedestrian by determining whether or not there is a pedestrian in imaged images of the imaging sections 12101 to 12104. Such recognition of a pedestrian is, for example, performed by a procedure of extracting characteristic points in the imaged images of the imaging sections 12101 to 12104 as infrared cameras and a procedure of determining whether or not it is the pedestrian by performing pattern matching processing on a series of characteristic points representing the contour of the object. When the microcomputer 12051 decides that there is a pedestrian in the imaged images of the imaging sections 12101 to 12104, and thus recognizes the pedestrian, the sound/image output section 12052 controls the display section 12062 so that a square contour line for emphasis is displayed so as to be superimposed on the recognized pedestrian. The sound/image output section 12052 may also control the display section 12062 so that an icon or the like representing the pedestrian is displayed at a desired position.

An example of the vehicle control system to which the technique according to the present disclosure can be applied has been described above. The technique according to the present disclosure can be applied to, for example, the imaging section 12031 among the above-described components. Specifically, the camera 10 to which the above-described first embodiment and second embodiment can be applied can be applied to the imaging section 12031. By applying the technique according to the present disclosure to the imaging section 12031, it is possible to output a moving image for which authenticity proof can be performed with a low load. Furthermore, this makes it possible to reduce power consumption and miniaturize the device as a vehicle-mounted device.

Note that the effects described in the description are merely examples and are not limited, and other effects may be provided.

Note that the present technique can also have the following configurations.

(1) An imaging device comprising:

a pixel array section that includes a plurality of pixels that are arranged in a matrix array and each generate a pixel signal corresponding to light received by exposure, and outputs image data of each of the pixel signals generated by the plurality of pixels at a frame cycle;
a signature generating section that generates signature data on a basis of the image data; and
an output control section that controls output of the image data and the signature data,
wherein the signature generating section
generates the signature data by thinning the image data output at the frame cycle in a unit of thinning that is based on the frame cycle.

(2) The imaging device according to the above (1),

wherein the output control section
outputs the signature data at a timing after a predetermined time passes from an output timing of the image data corresponding to the signature data.

(3) The imaging device according to the above (1) or (2),

wherein the output control section
outputs the image data and the signature data from an identical output terminal.

(4) The imaging device according to the above (3),

wherein the output control section
outputs the signature data in a last frame thinned in the unit of thinning for the image data for which the signature data has been generated.

(5) The imaging device according to the above (3),

wherein the output control section
outputs the signature data in a frame next to a last frame thinned in the unit of thinning for the image data for which the signature data has been generated.

(6) The imaging device according to the above (3),

wherein the output control section
outputs the signature data in a frame corresponding to a timing at which the signature generating section generates the signature data.

(7) The imaging device according to the above (3),

wherein the output control section
outputs the signature data in a frame designated in advance after a predetermined frame for the image data for which the signature data has been generated.

(8) The imaging device according to any one of the above (3) to (7),

wherein the output control section
outputs the signature data by adding information indicating a frame start, and information indicating a frame end.

(9) The imaging device according to any one of the above (3) to (7),

wherein the output control section
stores and outputs the signature data in an embedded data area in a frame of the image data.

(10) The imaging device according to any one of the above (3) to (7),

wherein the output control section
adds to the image data a line in a row direction of the array, and stores and outputs the signature data in the line added to the image data.

(11) The imaging device according to the above (1) or (2),

wherein the output control section includes
a communication terminal that communicates with a host device, and is different from an output terminal that outputs the image data, and
a storage section that is accessible from the host device via the communication terminal, and
the signature data written in the storage section by the signature generating section is output from the communication terminal.

(12) The imaging device according to the above (11), further comprising

an interrupt signal port that transmits an interrupt signal to the host device,
wherein the signature generating section
stores the generated signature data in the storage section, outputs the interrupt signal indicating that the signature data has been generated, from the interrupt signal port in response to a timing at which the signature data is generated, and outputs the signature data by reading the signature data stored in the storage section by the host device according to the interrupt signal.

(13) The imaging device according to the above (11),

wherein the signature generating section
stores the generated signature data in the storage section, and changes state information indicating a state of the storage section in the storage section, and
the output control section
outputs the signature data when the signature data stored in the storage section is read by the host device in a case where the host device performs polling via the communication terminal, and the state information is confirmed by the host device, and has changed from previous polling.

(14) The imaging device according to any one of the above (1) to (13),

wherein the signature generating section
generates the signature data for an image data group obtained by grouping a plurality of items of the image data.

(15) The imaging device according to the above (14),

wherein the signature generating section
integrates a plurality of items of the image data included in the image data group, and generates one item of the signature data.

(16) The imaging device according to the above (14),

wherein the signature generating section
generates the signature data for each of the plurality of items of image data included in the image data group.

(17) The imaging device according to any one of the above (1) to (16),

wherein the output control section
encrypts and outputs the signature data using a private key of a public key encryption scheme.

(18) The imaging device according to any one of the above (1) to (17),
wherein the pixel array section, the signature generating section, and the output control section are integrally configured.
(19) The imaging device according to the above (18), comprising:

a first chip on which the pixel array section is arranged; and
a second chip on which the signature generating section and the output control section are arranged and that is bonded with the first chip.

(20) An imaging method executed by a processor, comprising:

a step of outputting image data of each of pixel signals generated by a plurality of pixels at a frame cycle from a pixel array section that includes the plurality of pixels that are arranged in a matrix array and each generate a pixel signal corresponding to light received by exposure;
a signature generating step of generating signature data on a basis of the image data; and
an output control step of controlling output of the image data and the signature data,
wherein the signature generating step
generates the signature data by thinning the image data output at the frame cycle in a unit of thinning that is based on the frame cycle.

Reference Signs List

10, 2000 CAMERA
20 HOST DEVICE
30 DISPLAY DEVICE
100, 100a, 100b, 100c SENSOR
101 PIXEL ARRAY SECTION
103 PIXEL
104 OUTPUT I/F
105a, 105b, 105c COMMUNICATION/SENSOR CONTROL SECTION
110 SENSOR CONTROL SECTION
120 IMAGE PROCESSING SECTION
130, 131 INTERFACE
132 INTERRUPT SIGNAL PORT
200 RAW DATA
210 SIGNATURE DATA
1000 SIGNATURE PROCESSING SECTION

1021 SIGNATURE GENERATING SECTION
1022 SIGNATURE GENERATING/UPDATE MANAGING SECTION
1051 REGISTER

**Claims**

1. An imaging device comprising:

a pixel array section that includes a plurality of pixels that are arranged in a matrix array and each generate a pixel signal corresponding to light received by exposure, and outputs image data of each of the pixel signals generated by the plurality of pixels at a frame cycle;
a signature generating section that generates signature data on a basis of the image data; and
an output control section that controls output of the image data and the signature data,
wherein the signature generating section
generates the signature data by thinning the image data output at the frame cycle in a unit of thinning that is based on the frame cycle.

2. The imaging device according to claim 1,

wherein the output control section
outputs the signature data at a timing after a predetermined time passes from an output timing of the image data corresponding to the signature data.

3. The imaging device according to claim 1,

wherein the output control section
outputs the image data and the signature data from an identical output terminal.

4. The imaging device according to claim 3,

wherein the output control section
outputs the signature data in a last frame thinned in the unit of thinning for the image data for which the signature data has been generated.

5. The imaging device according to claim 3,

wherein the output control section
outputs the signature data in a frame next to a last frame thinned in the unit of thinning for the image data for which the signature data has been generated.

6. The imaging device according to claim 3,

wherein the output control section
outputs the signature data in a frame corresponding to a timing at which the signature generating section generates the signature data.

7. The imaging device according to claim 3,

wherein the output control section
outputs the signature data in a frame designated in advance after a predetermined frame for the image data for which the signature data has been generated.

8. The imaging device according to claim 3,

wherein the output control section
outputs the signature data by adding information indicating a frame start, and information indicating a frame end.

9. The imaging device according to claim 3,

wherein the output control section
stores and outputs the signature data in an embedded data area in a frame of the image data.

10. The imaging device according to claim 3,

wherein the output control section
adds to the image data a line in a row direction of the array, and stores and outputs the signature data in the line added to the image data.

11. The imaging device according to claim 1,
wherein the output control section includes

a communication terminal that communicates with a host device, and is different from an output terminal that outputs the image data, and
a storage section that is accessible from the host device via the communication terminal, and
the signature data written in the storage section by the signature generating section is output from the communication terminal.

12. The imaging device according to claim 11, further comprising

an interrupt signal port that transmits an interrupt signal to the host device,
wherein the signature generating section
stores the generated signature data in the storage section, outputs the interrupt signal indicating that the signature data has been generated, from the interrupt signal port in response to a timing at which the signature data is generated, and outputs the signature data by reading the signature data stored in the storage section by the host device according to the interrupt signal.

13. The imaging device according to claim 11,

wherein the signature generating section
stores the generated signature data in the storage section, and changes state information indicating a state of the storage section in the storage section, and
the output control section
outputs the signature data when the signature data stored in the storage section is read by the host device in a case where the host device performs polling via the communication terminal, and the state information is confirmed by the host device, and has changed from previous polling.

14. The imaging device according to claim 1,

wherein the signature generating section
generates the signature data for an image data group obtained by grouping a plurality of items of the image data.

15. The imaging device according to claim 14,

wherein the signature generating section
integrates a plurality of items of the image data included in the image data group, and generates one item of the signature data.

16. The imaging device according to claim 14,

wherein the signature generating section
generates the signature data for each of the plurality of items of image data included in the image data group.

17. The imaging device according to claim 1,

wherein the output control section

encrypts and outputs the signature data using a private key of a public key encryption scheme.

18. The imaging device according to claim 1,
    wherein the pixel array section, the signature generating section, and the output control section are integrally configured.

19. The imaging device according to claim 18, comprising:

    a first chip on which the pixel array section is arranged; and
    a second chip on which the signature generating section and the output control section are arranged and that is bonded with the first chip.

20. An imaging method executed by a processor, comprising:

    a step of outputting image data of each of pixel signals generated by a plurality of pixels at a frame cycle from a pixel array section that includes the plurality of pixels that are arranged in a matrix array and each generate a pixel signal corresponding to light received by exposure;
    a signature generating step of generating signature data on a basis of the image data; and
    an output control step of controlling output of the image data and the signature data,
    wherein the signature generating step
    generates the signature data by thinning the image data output at the frame cycle in a unit of thinning that is based on the frame cycle.

# FIG.1

FAKE IMAGE a

32a

30
ORIGINAL

31
HIDE LOWER HALF

FAKE IMAGE b

32b

# FIG.2

# FIG.3A

CAMERA 2000

SENSOR 2100

PIXEL ARRAY SECTION 2110

SIGNATURE PROCESSING SECTION 2111

2101

IMAGE PROCESSING SECTION 2120

MPEG DATA ETC.

EP 4 290 855 A1

# FIG.3B

# FIG.4A

TIME

Fsync

OUT-PUT DATA: FS | EBD | IMAGE DATA | EBD | FE | BLK | FS | Sig | FE | FS | EBD | IMAGE DATA | EBD | FE | BLK | FS | Sig | FE

# FIG.4B

TIME

Fsync

OUT-PUT DATA: FS | EBD | IMAGE DATA | EBD | FE | BLK | FS | EBD | IMAGE DATA | EBD | FE | FS | Sig | FE | FS | EBD | IMAGE DATA | EBD | FE | FS | Sig | FE

# FIG.5

# FIG.6

# FIG.7A

100
3020a

PIXEL SECTION

MEMORY+
LOGIC SECTION

3020b

⇨

100
3020a

3020b

# FIG.7B

100
3020a

PIXEL SECTION

MEMORY SECTION

LOGIC SECTION

3020c
3020d

⇨

100
3020a
3020c

3020d

# FIG.8

(a)

XVS | XHS

Start Code | Packet Header | Blanking Data | Embedded Data | Pixel Data | Blanking Data | End Code | Deskew Code | Idle Code(Blanking)

(b)

Packet Header

| [47] | [46] | [45] | [44:32] | [31] | [30:27] | [26:0] |
|------|------|------|---------|------|---------|--------|
| FS | FE | Valid | Line Number | EBD | ID | (RESERVE) |

# FIG.9A

| 4byte | n byte | 4byte |
|---|---|---|
| PH | PayloadData | PF |

| 1byte | 2byte | 1byte | | 2byte |
|---|---|---|---|---|
| DI | WC | ECC | | CS |

| 2bit | 6bit |
|---|---|
| VC | DT |

# FIG.9B

| 4byte |
|---|
| PH |

| 1byte | 2byte | 1byte |
|---|---|---|
| DI | FN/LN | ECC |

# FIG.10A

EP 4 290 855 A1

# FIG.10B

# FIG.11

# FIG.12

# FIG.13

SENSOR

100a

131

105a  COMMUNICATION/
SENSOR CONTROL SECTION

101

PIXEL ARRAY SECTION

1000a

SIGNATURE PROCESSING SECTION

104

130

PIXEL CONTROL SECTION

PIXEL ARRAY

ADC

1010

DATA PROCESSING
SECTION
(FOR IMAGE PROCESSING)

1021

SIGNATURE
GENERATING
SECTION

OUT-
PUT
I/F

107

102

108

EP 4 290 855 A1

# FIG.14

EP 4 290 855 A1

# FIG.15

Frame#1 — FS, EBD, IMAGE DATA #1, EBD, FE

Frame#2 — FS, EBD, IMAGE DATA #2, EBD, FE

Frame#n — FS, EBD, IMAGE DATA #n, EBD, FE

ID=4'h0

FS, EBD, SIGNATURE DATA Sig, FE

ID=4'h1

# FIG.16

Frame#1

| FS |
| EBD |
| IMAGE DATA #1 |
| EBD |
| EBD(FOR SIGNATURE) |
| FE |

Frame#2

| FS |
| EBD |
| IMAGE DATA #2 |
| EBD |
| EBD(FOR SIGNATURE) |
| FE |

⋮

Frame#n

| FS |
| EBD |
| IMAGE DATA #n |
| EBD |
| EBD(FOR SIGNATURE) |
| FE |

ID=4'h0

ID=4'h1

ID=4'h0

# FIG.17

# FIG.18

EP 4 290 855 A1

# FIG.19

EP 4 290 855 A1

# FIG.20

EP 4 290 855 A1

# FIG.21

EP 4 290 855 A1

# FIG.22

EP 4 290 855 A1

# FIG.23

FIG.24

# FIG.25

EP 4 290 855 A1

# FIG.26

**INTERNATIONAL SEARCH REPORT**

International application No.

**PCT/JP2022/003026**

**A. CLASSIFICATION OF SUBJECT MATTER**

*H04N 5/369*(2011.01)i; *H04N 5/232*(2006.01)i
FI:   H04N5/369; H04N5/232 300

According to International Patent Classification (IPC) or to both national classification and IPC

**B. FIELDS SEARCHED**

Minimum documentation searched (classification system followed by classification symbols)

H04N5/369; H04N5/232

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2017-41841 A (PANASONIC INTELLECTUAL PROPERTY MANAGEMENT CO., LTD.) 23 February 2017 (2017-02-23) paragraphs [0020]-[0024], [0058], fig. 2-3 | 1-3, 6, 9, 14-15, 17-20 |
| A | | 4-5, 7-8, 10-13, 16 |
| Y | JP 2005-184045 A (CANON INC) 07 July 2005 (2005-07-07) paragraphs [0029]-[0031] | 1-3, 6, 9, 14-15, 17-20 |
| Y | JP 2018-189469 A (RICOH CO LTD) 29 November 2018 (2018-11-29) paragraphs [0029], [0117], fig. 14 | 1-3, 6, 9, 14-15, 17-20 |
| Y | JP 2019-20431 A (SONY SEMICONDUCTOR SOLUTIONS CORPORATION) 07 February 2019 (2019-02-07) paragraph [0049], fig. 3 | 18-19 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **30 March 2022** | **12 April 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2022/003026** |

| Patent document cited in search report | | | Publication date (day/month/year) | Patent family member(s) | Publication date (day/month/year) |
| --- | --- | --- | --- | --- | --- |
| JP | 2017-41841 | A | 23 February 2017 | US 2018/0176503 A1 paragraphs [0028]-[0032], [0066], fig. 2-3 WO 2017/033348 A1 | |
| JP | 2005-184045 | A | 07 July 2005 | (Family: none) | |
| JP | 2018-189469 | A | 29 November 2018 | (Family: none) | |
| JP | 2019-20431 | A | 07 February 2019 | US 2020/0137335 A1 paragraph [0077], fig. 3 WO 2019/012779 A1 CN 110546916 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017184198 A